# EUROPÄISCHE PATENTSCHRIFT

(11) **EP 4 153 360 B1**
(45) Veröffentlichungstag und Bekanntmachung des Hinweises auf die Patenterteilung: **07.10.2026**
(21) Anmeldenummer: 21730112.6
(22) Anmeldetag: 20.05.2021
(51) Int. Cl.: B04B 9/12

(54) **ZENTRIFUGE**
CENTRIFUGE
CENTRIFUGEUSE

(30) Priorität: 20.05.2020 DE 102020113765
(43) Veröffentlichungstag der Anmeldung: 29.03.2023
(73) Patentinhaber: Andreas Hettich GmbH, 78532 Tuttlingen (DE)
(72) Erfinder: FIEDLER, Bernd, 07422 Bad Blankenburg (DE); HOELDERLE, Andreas, 78199 Braeunlingen-Doeggingen (DE); HORNEK, Matthias, 78532 Tuttlingen (DE); EBERLE, Klaus-Guenter, 78532 Tuttlingen (DE)
(74) Vertreter: patcare Patentanwälte Partnerschaft mbB
(86) Internationale Anmeldenummer: PCT/EP2021/063510
(87) Internationale Veröffentlichungsnummer: WO 2021/234107

(56) Entgegenhaltungen:
- CN-A- 108 823 914
- CN-U- 203 664 026
- DE-B- 1 038 990
- US-A- 4 079 882

## Beschreibung

Die Erfindung betrifft eine Zentrifuge, insbesondere Laborzentrifuge, gemäß der im Oberbegriff des Anspruchs 1 angegebenen Art.

Es sind Zentrifugen in vielerlei Bauformen bekannt. Besonders bei Laborzentrifugen ist man seit jeher bestrebt, möglichst kompakte Geräte vorzuschlagen, da die Platzverhältnisse in Laboratorien oft begrenzt sind. Hinzu kommt, dass Laborzentrifugen in der Regel von oben be- und entladen werden und daher oberhalb der Geräte genügend Freiraum zum Öffnen des Deckels vorhanden sein muss.

Gleichzeitig ist es erforderlich, bei der Konstruktion einer Zentrifuge auf eine gute Dämpfung zu achten, um den bei der Zentrifuge während des Betriebs unweigerlich auftretenden Unwuchten entgegenwirken zu können. Allgemein ist es zum Beispiel bekannt, den den Rotor tragenden Motor zu diesem Zweck auf Dämpfungselementen zu lagern, deren Federachsen parallel zur Längsachse des Motors liegen. Die Dämpfungselemente bestehen dabei in der Regel im Wesentlichen aus Kautschuk/Gummi. Solche Dämpfungselemente aus Kautschuk/Gummi sind preisgünstig verfügbar sowie stehen in verschiedensten Bauformen und Materialien als Katalogteil zur Verfügung. Die Eigenschaften sind klar definiert und dokumentiert, so dass derartig ausgebildete Dämpfungselemente vielseitig eingesetzt werden. Solche Dämpfungselemente werden somit bei einer Neukonstruktion oder Überarbeitung einer Zentrifuge mit verwendet. Für Anwendungen, bei denen während des Betriebs keine größeren Unwuchten auftreten, sind solche Dämpfungselemente auch völlig ausreichend.

Solche Zentrifugen werden auch in vollautomatischen Systemen eingesetzt. Beispielsweise beim Einsatz von Zweifachrotoren wird eine hohe Unwuchtverträglichkeit der Zentrifuge gefordert. Diese liegt beispielsweise bei einer ungeraden in den Rotor eingebrachten Probenanzahl vor, sodass sich ein Lauf, beispielsweise mit einem vollbeladenen Gehänge eines Rotors auf der einen Seite und einem unbeladenen Gehänge eines Rotors auf der anderen Seite, ergibt.

Zentrifugen müssen aber immer komplexere Aufgaben lösen. Die während des Betriebs der Zentrifuge auftretende Unwucht wird für derartige komplexe Aufgaben und Prozesse zunehmend zum Problem, da sich die bekannten Dämpfungselemente aus Gummi im Hinblick auf ihre Dämpfungseigenschaften und ihren Dämpfungsbereich als unzureichend erweisen. Die Dämpfungselemente in ihrer bisherigen Ausbildung können die entstehenden Kräfte nur mangelhaft absorbieren, was sich nachteilig auf die durchzuführenden Prozesse auswirkt. Zum anderen werden die Dämpfungselemente auch in einer Art und Weise belastet, die ihre Lebensdauer und die der Zentrifuge verkürzen.

Es wurde daher versucht, diesem Problem mit unterschiedlichen Ausrichtungen der Federachsen der Dämpfungselemente gegenüber dem Rotor und dem Motor zu begegnen. Zudem wurden auch mehrere unterschiedliche Arten von Dämpfungselementen in Reihe geschaltet.

Beispielsweise ist aus der DE 39 22 744 A1 eine Zentrifuge bekannt, die einen Rotor zur Aufnahme von Behältern mit Zentrifugiergut aufweist. Über eine Antriebswelle wird der Rotor angetrieben, wofür die Antriebswelle mit einem Motor verbunden ist. Der Motor mit Antriebswelle und Rotor ist mit einer Lagereinheit verbunden, welche mehrere eine Federachse umfassende Dämpfungselemente aufweist. Das Ganze ist mit einem Trägerelement zur Festlegung des Motors und der vom Motor getragenen Bauteile in der Zentrifuge verbunden. Die Federachsen der Dämpfungselemente können in einem spitzen Winkel σ zur Drehachse Y des Motors angestellt sein. Die Dämpfungselemente sind jeweils über eine Strebe mit der Lagereinheit verbunden. Die Streben sind so angestellt und angeordnet, dass diese mit der jeweiligen Federachse der Dämpfungselemente konzentrisch ausgerichtet sind. Die Lagereinheit umfasst eine Trägerplatte. Ein Dämpfungselement wird durch eine Schraubenfeder und ein weiteres Dämpfungselement in Form zweier Ausgleichskammern gebildet, zwischen denen Dämpfungsfluid durch einen Drosselkanal je nach Belastungsrichtung strömt.

Aus der WO 2015/128296 A1 ist bekannt, die Federachsen der Dämpfungselemente schräg anzustellen und Metallblattfedern, in der Druckschrift als Laschen bezeichnet, als ein weiteres Dämpfungselement in Kombination mit den Gummipuffern zu verwenden.

Die GB 739 666 A offenbart eine Zentrifuge, bei der Gummikissen als Dämpfungselemente sowie über einen Reibwiderstand gedämpfte Arme als weitere Dämpfungselemente vorgesehen sind.

Aus der US 1 848 641 A ist eine Zentrifuge bekannt, bei der der Motor über Streben und Dämpfungselemente in Form von Federn im Gehäuse gelagert ist.

Die DE 195 16 904 A1 offenbart eine Laborzentrifuge mit einer Vibrationsdämpfungseinrichtung aus Gummi.

Die bekannten Maßnahmen zur Dämpfung des Motors mit dem vom Motor getragenen Rotor sind insbesondere im Frequenzbereich von 15 bis 50 Hz wenig effektiv. Ziel ist es jedoch, sowohl die zulässige Unwucht einer Zentrifuge sowie die Dämpfung über das gesamte während des Betriebs der Zentrifuge auftretende Frequenzspektrum zu steigern, um dadurch die Anwendungsmöglichkeiten einer Zentrifuge zu verbessern und trotzdem einen sicheren Betrieb zu gewährleisten. Es darf dabei zu keinem Ausbrechen des Rotors kommen, insbesondere nicht im kritischen Resonanzbereich. Die Auslenkung des Rotors muss möglichst klein gehalten werden. Die Baugröße darf sich durch die zusätzlichen Maßnahmen zur besseren Dämpfung nicht vergrößern.

Gleichzeitig muss die Schwingungsübertragung der rotierenden Masse, also des unwuchtbehafteten Rotors im Betrieb, der gegebenenfalls nur teilweise bestückt ist, auf die Trägerplatte mit dem mit der Trägerplatte verbundenen Zentrifugengehäuse möglichst gering gehalten werden. Andernfalls kommt es zu einer inakzeptablen Geräuschentwicklung. Die Zentrifuge beginnt aufgrund der Vibrationen, beispielsweise auf dem Labortisch, zu wandern.

Die DE°10°38°990°B offenbart eine Zentrifuge mit Motorantrieb und eingebauten schwingungsdämpfenden Elementen. Die Schwingungsdämpfung zwischen der Trommel und dem Gehäuse wird dabei durch beispielsweise ein Metallkissen ausgebildet. Dieses einheitliche Metallkissen wirkt dabei in mehrere Richtungen. Nachteilig an dieser Lösung ist, dass dieser den Motor komplett umschließende Ring insbesondere bei Laborzentrifugen eine sehr steife Lagerung mit unzureichender Dämpfung ausbildet.

Weiterhin ist in der CN°108°823°914°A eine Fussanordnung für eine Kleidungsbehandlungsvorrichtung, beispielsweise eine Waschmaschine, mit einem Dämpfungselement. Das Dämpfungselement kann dabei auch als Metallkissen ausgebildet sein.

Der Erfindung liegt daher die Aufgabe zugrunde, eine Zentrifuge gemäß der im Oberbegriff des Anspruches 1 angegebenen Art derart weiterzubilden, dass unter Vermeidung der genannten Nachteile eine ausreichende und zuverlässige Dämpfung durch Metallkissen über einen möglichst großen Frequenzbereich erreicht wird und gleichzeitig eine lange Lebensdauer gewährleistet.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, die aus dem Schwerlastbereich und rauen Umgebungsbedingungen bekannten Metallkissen als Dämpfungselemente zu verwenden, da diese über einen breiten Frequenzbereich erheblich bessere Dämpfungseigenschaften aufweisen als bisher für Zentrifugen bekannte Dämpfungselemente.

Nach der Erfindung ist daher zumindest ein Dämpfungselement vollständig aus Metall als Metallkissen umfassend ein Drahtgestrick mit elastischen Eigenschaften ausgebildet. Um unterschiedlichen Belastungen des Rotors gerecht zu werden, bilden zwei Metallkissen zusammen ein Dämpfungselement, wobei das erste Metallkissen einer ersten Richtung einer Auslenkung und das zweite Kissen einer, insbesondere entgegengesetzten, zweiten Richtung einer Auslenkung des Rotors entgegenwirkt. Hierdurch wird erreicht, dass das Metallkissen nur auf Druck belastet wird, da diese bei Zugbelastung Schaden nehmen oder sogar zerstört werden können.

Die Lagereinheit weist zumindest ein Lager mit einer Lagerplatte auf. Auf der einen Seite der Lagerplatte ist das erste Metallkissen und auf der zweiten Seite der Lagerplatte ist das zweite Metallkissen angeordnet.

Ein Führungsstift durchgreift das erste Metallkissen, das an der Lagerplatte mittelbar oder unmittelbar anliegt, die Lagerplatte und das zweite Metallkissen, das an der Lagerplatte und dem Trägerelement mittelbar oder unmittelbar anliegt. Der Führungsstift ist auf der einen Seite fest mit dem Trägerelement verbunden. Auf der anderen Seite des Führungsstifts ist ein Kopf vorgesehen, der an dem ersten Metallkissen mittelbar oder unmittelbar anliegt. Das erste Metallkissen, die Lagerplatte und das zweite Metallkissen sind gegenüber dem Führungsstift frei beweglich. Hierdurch wird die Dämpfung in Richtungen gewährleistet, die notwendig ist, um mögliche Bewegungen in diese Richtungen im Betrieb zu dämpfen, jedoch die Metallkissen jeweils nur auf Druck zu belasten.

Gemäß einer weiteren vorteilhaften Ausbildungsform der Erfindung entspricht die zweite Richtung einer der ersten Richtung entgegengesetzten Richtung einer Auslenkung des Rotors.

Die einzelnen Parameter der Metallkissen für Zentrifugen müssen aber aufwendig ermittelt werden. Diagramme mit frequenzabhängigen Werten zur Dämpfung bei Metallkissen sind von den Herstellern von solchen Metallkissen nicht erhältlich. Daher bedarf es komplexer Berechnungen und Messungen für die Auslegung solcher Metallkisten für die relativ leichten Zentrifugen, vor allem für Laborzentrifugen. Alle Messungen, Berechnungen und Simulationen zur Auslegung der Metallkissen für Zentrifugen müssen daher Schritt für Schritt für einzelne Typen von Zentrifugen durchgeführt werden. Wurde dies gemacht und die Parameter für die Zentrifuge optimiert, sind die Ergebnisse im Hinblick auf die Dämpfungseigenschaften über einen breiten Frequenzbereich hervorragend.

Für bestimmte Einbausituationen ist es von Vorteil, wenn die Metallkissen zylindrisch ausgebildet sind. Hierdurch können die Metallkissen platzsparend entsprechend der Querschnittsfläche der bereits vorhandenen Kupplungselemente und/oder der notwendigen Fläche für die Kraftaufnahme ausgebildet werden.

Es können auch die Dämpfungselemente verschiedener Lager unterschiedlich ausgebildet sein, insbesondere sind die Dämpfungselemente eines ersten Lagers im Hinblick auf die Dämpfung optimiert, und die Dämpfungselemente eines zweiten Lagers im Hinblick auf die Aufnahme der Gewichtskraft optimiert. Vorzugsweise kann dabei ein Dämpfungselement des ersten Lagers zumindest ein Metallkissen und das andere Dämpfungselement des zweiten Lagers kann zumindest Kautschuk/Gummi umfassen.

Dies hat den Vorteil, dass im Wesentlichen die Lager mit den Metallkissen optimiert für die geforderte Dämpfung der Lagereinheit der Zentrifuge ausgelegt werden können und die Lager mit dem Kautschuk/Gummi dabei die Last des Motors mit Rotor aufnehmen. Hierdurch werden beispielsweise untere und obere Metallkissen gleich belastet werden. Dies ermöglicht, auf die Dämpfung optimierte Metallkissen einzusetzen. Die Last des Motors mit Rotor muss bei der Auslegung der Metallkissen nicht berücksichtigt werden. Grundsätzlich können dadurch kleinere, weichere Metallkissen eingesetzt werden, da diese die Last des Motors und des Rotors nicht tragen und auch dadurch nicht vorgespannt werden.

Vorzugsweise ist der Abstand in Umfangsrichtung bezogen auf die Antriebsachse benachbarter Dämpfungselemente und/oder Lager zueinander gleich.

Für manche Anwendungen kann es von Vorteil sein, wenn zumindest eine Federachse eines Dämpfungselements senkrecht zur Antriebswelle ausgerichtet ist.

Ergänzend oder alternativ hierzu kann auch zumindest eine Federachse eines Dämpfungselements parallel zur Antriebswelle ausgerichtet sein.

Gemäß einer Ausführungsform der Erfindung sind mehrere Lager mit Dämpfungselementen vorgesehen. Die Federachsen der Hälfte der Dämpfungselemente sind senkrecht zur Antriebswelle und die Federachsen der anderen Hälfte der Dämpfungselemente parallel zur Antriebswelle ausgerichtet.

Hierbei können abwechselnd die Federachsen der Dämpfungselemente senkrecht zur Antriebswelle und parallel zur Antriebswelle ausgerichtet sein.

Vorzugsweise lassen die Dämpfungselemente eine maximale Auslenkung im Bereich des Rotors von weniger als 2 mm zu, insbesondere von weniger als 1,5 mm und/oder im Bereich des Dämpfungselements von weniger als 1 mm, insbesondere von weniger als 0,9 mm.

Beispielsweise können drei Dämpfungselemente vorgesehen sein, deren Federachse jeweils gleich ausgerichtet ist.

Gemäß einer Ausführungsform der Erfindung begrenzt eine Scheibe, insbesondere eine Metallscheibe, das Dämpfungselement in Richtung der Federachse auf einer Seite. Über die Scheibe kann sichergestellt werden, dass die auftretenden Kräfte über die gesamte Querschnittsfläche des Dämpfungselements eingeleitet oder übertragen werden.

Hierbei kann die Scheibe bevorzugt das Dämpfungselement in Richtung Federachse vollständig bedecken.

Um zu verhindern, dass Korrosion auftritt, ist das Metallkissen durch einen Stahldraht gebildet, der Chrom-Nickel beinhaltet. Es handelt sich somit um einen nichtrostenden Stahldraht.

Vorzugsweise weist der Stahldraht einen Durchmesser von 0,05 mm bis einschließlich 0,5 mm auf. Es hat sich gezeigt, dass sich in diesem Bereich eine für den Anwendungszweck optimale elastische Verformung ergibt.

Beispielsweise kann das Metallkissen einen Außendurchmesser von 12 mm bis einschließlich 50 mm aufweisen.

Insbesondere kann das Metallkissen als Hohlzylinder ausgebildet sein, insbesondere mit einem Innendurchmesser von 4 mm bis 12 mm.

Um den Anforderungen der Zentrifuge im Betrieb möglichst optimal gerecht zu werden, liegt der Dämpfungsbeiwert k des Metallkissens bei einer vorgegebenen Erregerfrequenz in folgenden Bereichen:
- Erregerfrequenz von 1 Hz, der Dämpfungsbeiwert k liegt zwischen 500 und 8.000 Ns/m;
- Erregerfrequenz von 10 Hz, der Dämpfungsbeiwert k liegt zwischen 300 und 5.000 Ns/m;
- Erregerfrequenz von 20 Hz, der Dämpfungsbeiwert k liegt zwischen 200 und 2.500 Ns/m;
- Erregerfrequenz von 50 Hz, der Dämpfungsbeiwert k liegt zwischen 80 und 1.200 Ns/m;
- Erregerfrequenz von 100 Hz, der Dämpfungsbeiwert k liegt zwischen 40 und 500 Ns/m.

Gemäß einer Ausführungsform der Erfindung liegt die Steifigkeit (c) des Metallkissens in einem Bereich von 3 bis 300 N/mm.

Der Vorteil des Einsatzes von Metallkissen bei Zentrifugen ist neben den genannten Dämpfungseigenschaften auch die Alterungsbeständigkeit. Es kommt zu keinem Verhärten oder zu einem Kriechen des Materials. Bei Verwendung von rostfreiem Stahl ist eine Korrosionsbeständigkeit gegen Lösungsmittel, Säuren, Öle, Fette, Flüssigkeiten und Staub gegeben. Zudem weisen derartige Metallkissen eine hohe Alterungsbeständigkeit auf. Metallkissen haben eine hohe Unwuchtverträglichkeit, benötigen geringen Bauraum und können dadurch relativ motornah und rotornah im Zentrifugengehäuse platziert werden. Durch den auf Druck belasteten Einbau erhöht sich zudem die Betriebssicherheit. Ein Abreißen wird durch die Metallkisten verhindert - im Gegensatz zu den bisher bekannten Kautschukelementen, welche auf Zugbelastung gerissen sind. Zudem bleiben die Parameter des Metallkissens über die Lebensdauer des Metallkissens annähernd gleich. Auch gegenüber Temperaturschwankungen ergeben sich keine Änderungen bei den Parametern des Metallkissens. Ein Einsatz in einem erhitzten Motorraum ist somit ohne weiteres möglich, ohne dass sich das Laufverhalten der Zentrifuge ändert.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine perspektivische Schnittansicht auf die Zentrifuge mit Motor, Rotor, Sicherheitskessel und Dämpfungselementen gemäß dem Stand der Technik aus Gummi;
- Fig. 1b: eine perspektivische Teilansicht von Fig. 1a auf den im Zentrifugengehäuse gelagerten Motor mit Lagerplatten und Dämpfungselementen;
- Fig. 3e: eine Querschnittsansicht von Figur 3a;
- Fig. 3f: eine Schnittansicht von oben gemäß der Linie C-C von Fig. 3e;
- Fig. 4a: eine perspektivische Schnittansicht auf die Zentrifuge gemäß einer dritten Ausführungsform der Erfindung mit Motor, Rotor, Sicherheitskessel und Dämpfungselementen nach dem Stand der Technik von Fig. 1 und einer weiteren Ausbildung;
- Fig. 4b: eine perspektivische Teilansicht von Fig. 4a auf den im Zentrifugengehäuse gelagerten Motor mit Lagerplatten und Dämpfungselementen;
- Fig. 4c: eine Längsschnittansicht von Fig.4a;
- Fig. 4d: eine Teilschnittansicht Z von Fig. 4c;
- Fig. 4e: eine Querschnittsansicht von Figur 4a;
- Fig. 4f: eine Schnittansicht von oben gemäß der Linie C-C von Fig. 4e;
- Fig. 5a: eine perspektivische Schnittansicht auf die Zentrifuge gemäß einer vierten Ausführungsform der Erfindung mit Motor, Rotor, Sicherheitskessel und Dämpfungselementen gemäß einer weiteren Ausbildung;
- Fig. 5b: eine perspektivische Teilansicht von Fig. 5a auf den im Zentrifugengehäuse gelagerten Motor mit Lagerplatten und Dämpfungselementen;
- Fig. 5c: eine Längsschnittansicht von Fig. 5a;
- Fig. 5d: eine Teilschnittansicht Z von Fig. 5c;
- Fig. 5e: eine Querschnittsansicht von Figur 5a;
- Fig. 5f: eine Schnittansicht von oben gemäß der Linie C-C von Fig. 5e;
- Fig. 6: Diagramme zur Auslenkung der Motorachse oben (im Bereich des Rotors) und unten (im Bereich der Lagerung, also der Dämpfungselemente) und;
- Fig. 7: Diagramme zur Auslenkung der Drehachse mit Kautschukelementen und mit Merallkissen.

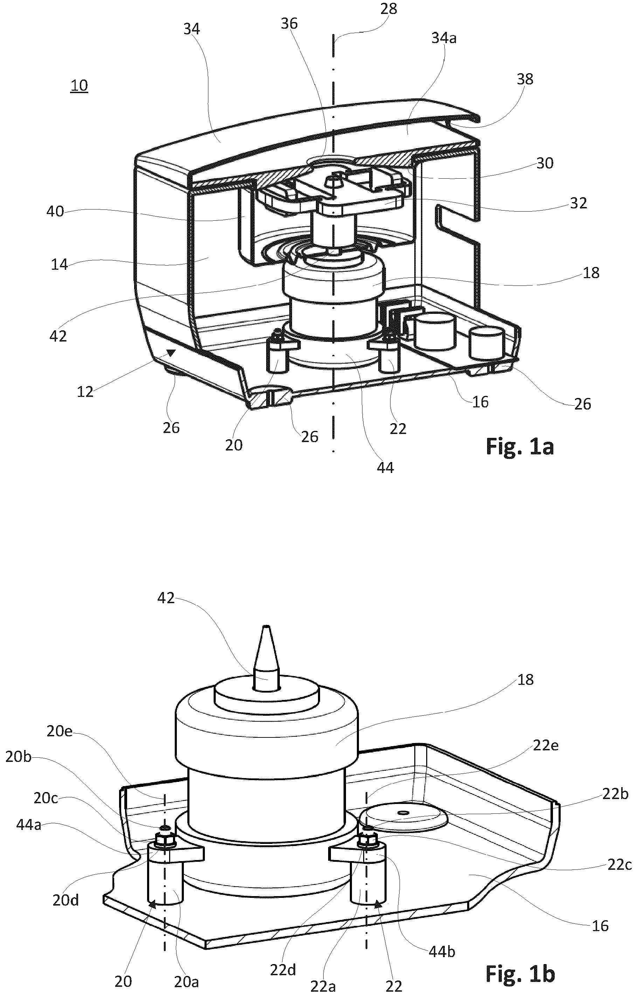

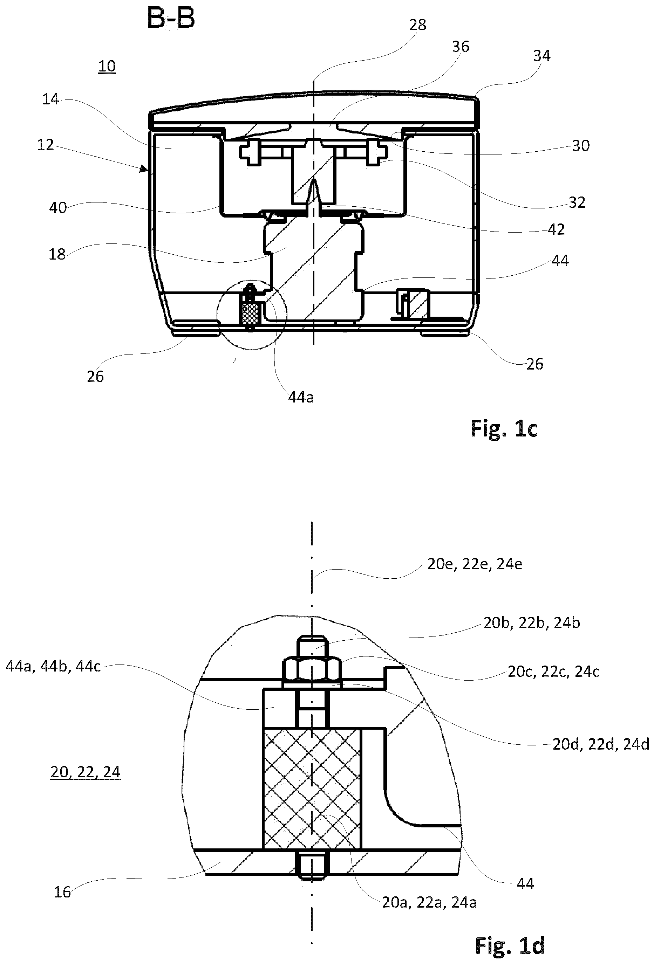

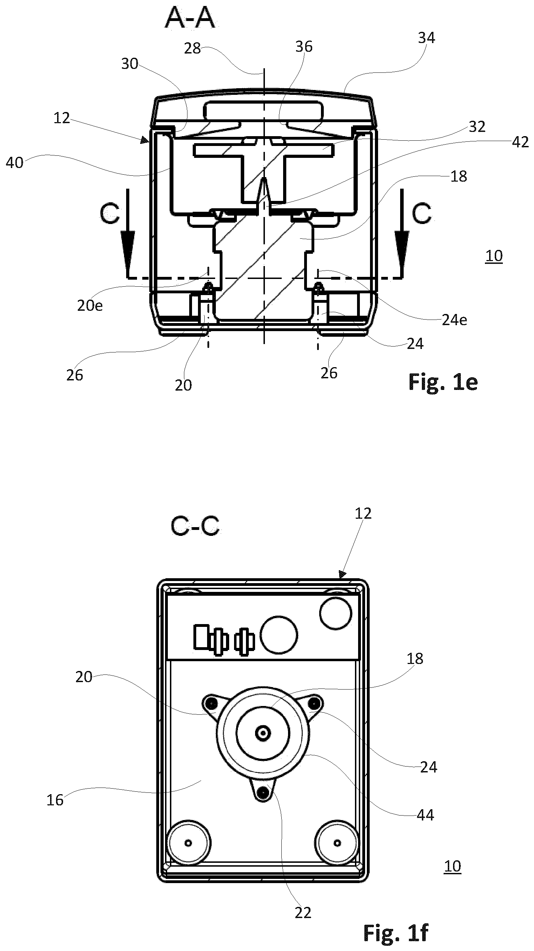

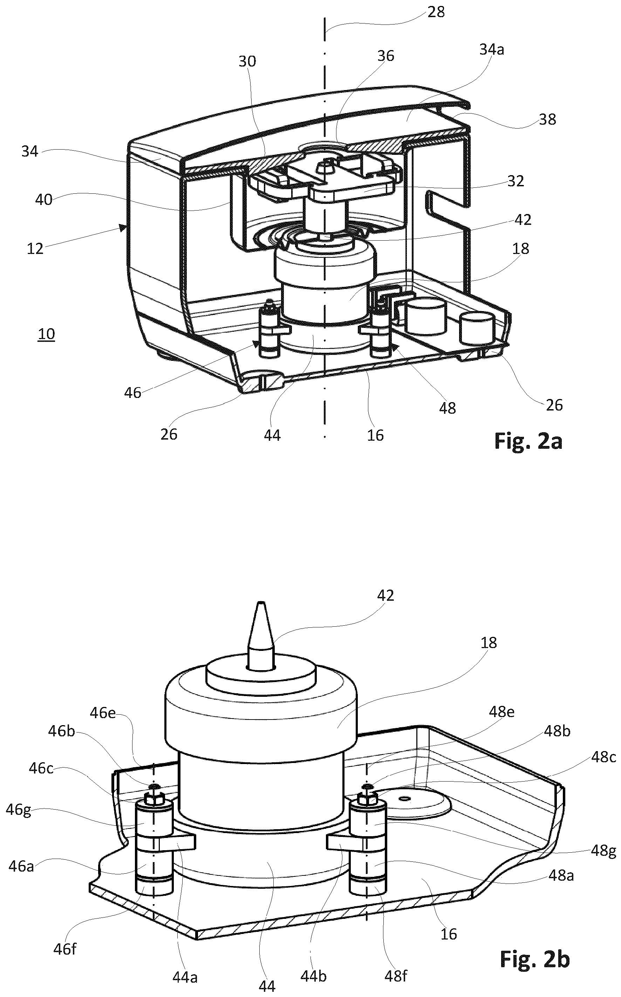

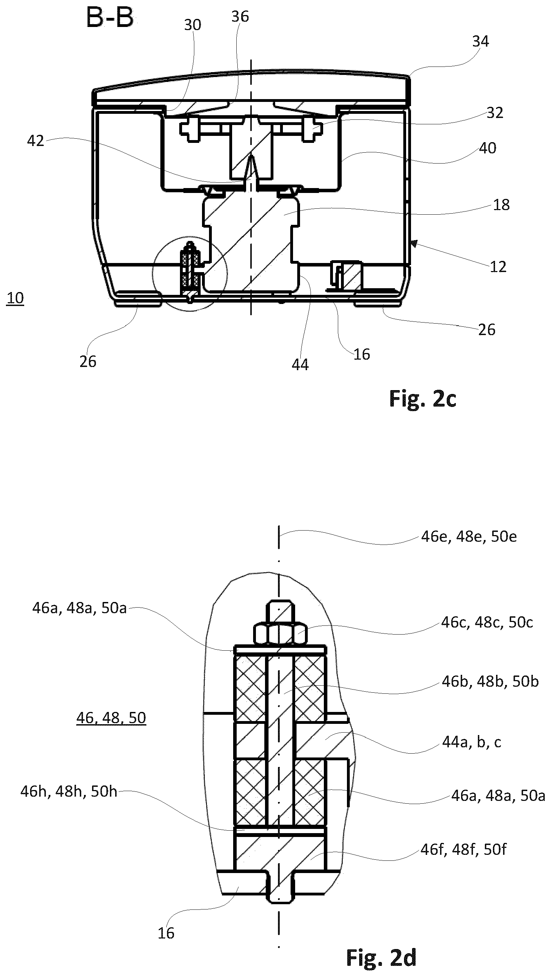

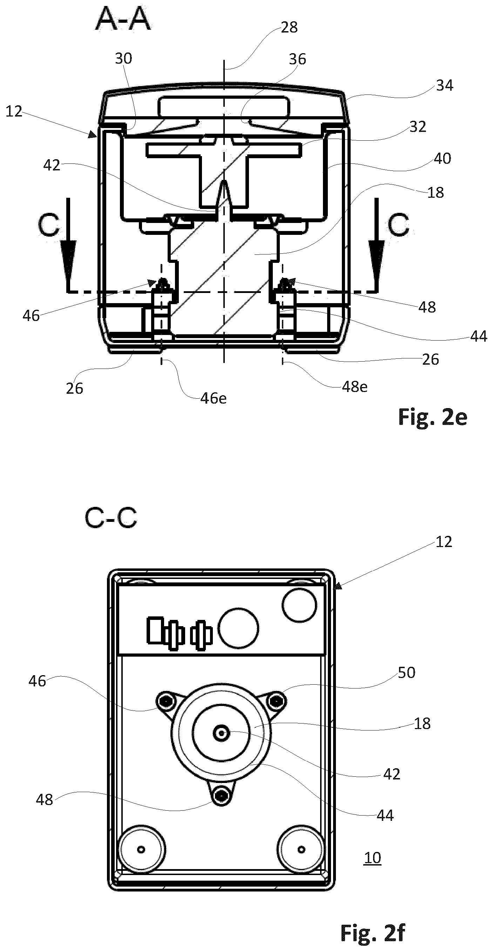

In den Fig. 1 bis 5 sind fünf verschiedene Ausführungsformen einer Laborzentrifuge 10 in unterschiedlichen Ansichten dargestellt, wobei die Fig.1 den Stand der Technik zeigt und die Fig. 2 bis 5 vier verschiedene Ausführungsformen nach der Erfindung. Zur besseren Erkennbarkeit der erfindungswesentlichen Elemente wird auf die Darstellung sämtlicher Bauteile der Laborzentrifuge 10 verzichtet. Es werden nur die für das Verständnis der Erfindung notwendigen Bauteile der einzelnen Ausführungsformen in den jeweiligen Figuren dargestellt.

In den Fig. 1a bis 1f ist eine erste Ausführungsform einer Laborzentrifuge 10 nach dem Stand der Technik dargestellt.

In einem Zentrifugengehäuse 12 ist in einem Innenraum 14 auf einer Bodenplatte 16 ein Motor 18 über drei Auflager 20, 22, und 24 angeordnet. Die Bodenplatte 16 ist mit vier integrierten Füßen 26 an der Unterseite der Bodenplatte 16 versehen, welche in den Eckbereichen der Bodenplatte 16 vorgesehen sind. Mit den Füßen 26 steht die Laborzentrifuge 10 beispielsweise auf einem hier nicht dargestellten Labortisch.

Das Zentrifugengehäuse 12 schließt oben den Innenraum 14 ab und weist eine zu einer Motorachse 28 konzentrische Ausnehmung 30 auf, über die ein Rotor 32 beladen werden kann.

Ein Zentrifugendeckel 34 greift bereichsweise in die Ausnehmung 30 ein und schließt dadurch den Innenraum 14 ab. Über eine konzentrisch angeordnete Lüftungsöffnung 36 und eine weitere seitlich angeordnete Lüftungsöffnung 38 strömt Umgebungsluft während des Betriebs der Laborzentrifuge 10 in den Innenraum 14. Der Zentrifugendeckel 34 ist hierfür zweischalig ausgebildet, wodurch ein Strömungskanal 34a zwischen der seitlichen Lüftungsöffnung 38 und der konzentrischen Lüftungsöffnung 36 gebildet ist. Der Zentrifugendeckel 34 ist in herkömmlicher Weise schwenkbar am Zentrifugengehäuse 12 gelagert.

An die konzentrische Ausnehmung 30 des Zentrifugengehäuses 12 schließt sich ein Sicherheitskessel 40 an, der mit dem Zentrifugengehäuse 12 fest verbunden ist. Eine Antriebswelle 42 durchgreift den Sicherheitskessel 40 durch eine entsprechende im Boden des Sicherheitskessels eingebrachte Bohrung. Auf der mit dem Motor 18 verbundenen Antriebswelle 42 ist der Rotor 32 drehfest angeordnet. Der Rotor 32 wird in bekannter Weise von dem Motor 18 über die Antriebswelle 42 angetrieben.

Der Motor 18 ist fest in eine Lagereinheit 44 eingebracht und dort angeordnet. Die Lagereinheit 44 ist über die Auflager 20, 22, 24 mit der Bodenplatte 16 verbunden. Hierfür weist die Lagereinheit 44 jeweils einen plattenförmigen Vorsprung 44a, 44b, 44c auf. Der plattenförmige Vorsprung 44a ist dem Auflager 20, der plattenförmige Vorsprung 44b ist dem Auflager 22 und der plattenförmige Vorsprung 44c ist dem Auflager 24 zugeordnet. Die Lagereinheit 44 ist in einem vorbestimmten Abstand zur Bodenplatte 16 über die Auflager 20, 22, 24 angeordnet.

Das Auflager 20 weist ein Dämpfungselement in Form eines Gummikissens 20a auf, welches auf der Bodenplatte 16 aufliegt. Das Gummikissen 20a ist als Zylinder ausgebildet. Ein Gewindebolzen 20b ist jeweils an den Stirnseiten des Gummikissens 20a angebracht und ist mit der Bodenplatte 16 verschraubt. Der plattenförmige Vorsprung 44a liegt dabei mit seiner Unterseite an der Oberseite des Gummikissens 20a an. Über eine Mutter 20c, welche auf die Schraube 20b aufgeschraubt ist und gegen die Oberseite des plattenförmigen Vorsprungs 44a drückt, wird die Lagereinheit 44 auf dem Gummikissen 20a des Auflagers 20 gehalten. Zwischen der Mutter 20c und der Oberseite des plattenförmigen Vorsprungs 44a ist eine Unterlegscheibe 20d eingebracht.

In entsprechender Weise sind die Auflager 22 und 24 aufgebaut.

Das Auflager 22 weist ein Dämpfungselement in Form eines Gummikissens 22a auf, welches auf der Bodenplatte 16 aufliegt. Das Gummikissen 22a ist als Zylinder ausgebildet. Ein Gewindebolzen 22b ist jeweils an den Stirnseiten des Gummikissens 22a angebracht und ist mit der Bodenplatte 16 verschraubt. Der plattenförmige Vorsprung 44b liegt dabei mit seiner Unterseite an der Oberseite des Gummikissens 22a an. Über eine Mutter 22c, welche auf die Schraube 22b aufgeschraubt ist und gegen die Oberseite des plattenförmigen Vorsprungs 44b drückt, wird die Lagereinheit 44 auf dem Gummikissen 22a des Auflagers 22 gehalten. Zwischen der Mutter 22c und der Oberseite des plattenförmigen Vorsprungs 44b ist eine Unterlegscheibe 22d eingebracht.

Das Auflager 24 weist ein Dämpfungselement in Form eines Gummikissens 24a auf, welches auf der Bodenplatte 16 aufliegt. Das Gummikissen 24a ist als Zylinder ausgebildet. Ein Gewindebolzen 24b ist jeweils an den Stirnseiten des Gummikissens 24a angebracht und ist mit der Bodenplatte 16 verschraubt. Der plattenförmige Vorsprung 44c liegt dabei mit seiner Unterseite an der Oberseite des Gummikissens 24a an. Über eine Mutter 24c, welche auf die Schraube 24b aufgeschraubt ist und gegen die Oberseite des plattenförmigen Vorsprungs 44c drückt, wird die Lagereinheit 44 auf dem Gummikissen 24a des Auflagers 24 gehalten. Zwischen der Mutter 24c und der Oberseite des plattenförmigen Vorsprungs 44c ist eine Unterlegscheibe 24d eingebracht.

Die Gummikissen 20a, 22a, 24a weisen jeweils eine Federachse 20e, 22e, 24e auf, welche identisch mit der Achse der zugeordneten Schraube 20b, 22b, 24b ist und parallel zur Motorachse 28 ausgerichtet ist.

Der Motor 18, mit der Antriebswelle 42 und dem Rotor 32, ist somit komplett in der Lagereinheit 44 angeordnet und wird von dieser getragen. Über die Auflager 20, 22, 24 sind diese Teile mit dem Zentrifugengehäuse 12 verbunden. Durch die Gummikissen 20a, 22a, 24a wird die Lagereinheit 44 im Zentrifugengehäuse gelagert und eine Geräuschentwicklung verhindert. Die Dämpfungseigenschaften sind aber ungenügend.

In den Fig. 2a bis 2f ist eine erste Ausführungsform einer Laborzentrifuge 10 nach der Erfindung dargestellt. Im Folgenden werden für die gleichen Teile die gleichen Bezugszeichen verwendet. Zudem wird nur auf die Unterschiede zur Ausführungsform nach dem Stand der Technik eingegangen.

In Bezug auf die Ausführungsform nach Fig. 1 sind andere Auflager 46, 48, 50 vorgesehen. Die plattenförmigen Vorsprünge 44a, 44b, 44c liegen auf einem ersten Metallkissen 46a, 48a, 50a auf. Diese ersten Metallkissen 46a, 48a, 50a werden durch die Last der Masse des Motors 18 und des Rotors 32 vorgespannt. Zudem sind die ersten Metallkissen 46a, 48a, 50a etwas kürzer als die Gummikissen 20a, 22a, 24a von Fig. 1 ausgebildet und liegen auf einem Lagerabsatz 46f, 48f, 50f auf. Der Lagerabsatz 46f, 48f, 50f ist jeweils mit der Bodenplatte 16 verschraubt. Von dem Lagerabsatz 46f, 48f, 50f erstreckt sich die Schraube 46b, 48b, 50b nach oben, durchgreift den plattenförmigen Vorsprung 44a, 44b, 44c, ein entsprechend dem ersten Metallkissen 46a, 48a, 50a ausgebildetes zweites Metallkissen 46g, 48g, 50g und die Unterlegscheibe 46d, 48d, 50d. Die Mutter 46c, 48c, 50c ist auf die Schraube 46b, 48b, 50b aufgeschraubt und drückt auf die Unterlegscheibe und das zweite Metallkissen 46g, 48g, 50g. Zudem ist zwischen dem zweiten Metallkissen 46g, 48g, 50g und dem Lagerabsatz 46f, 48f, 50f eine zweite Unterlegscheibe 46h, 48h, 50h eingebracht.

Auf diese Weise wirken somit das erste Metallkissen 46a, 48a, 50a einer Bewegung nach unten und das zweite Metallkissen 46g, 48g, 50g einer Bewegung nach oben entgegen. Dabei sind sie jeweils nur auf Druck belastet, wodurch die optimalen Dämpfungseigenschaften der Metallkissen zum Tragen kommen.

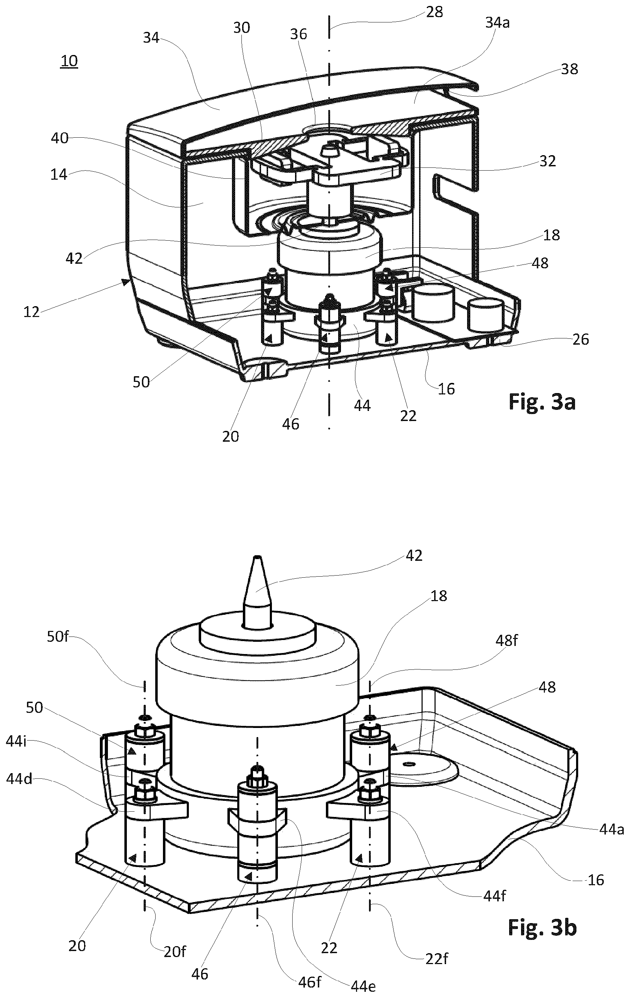

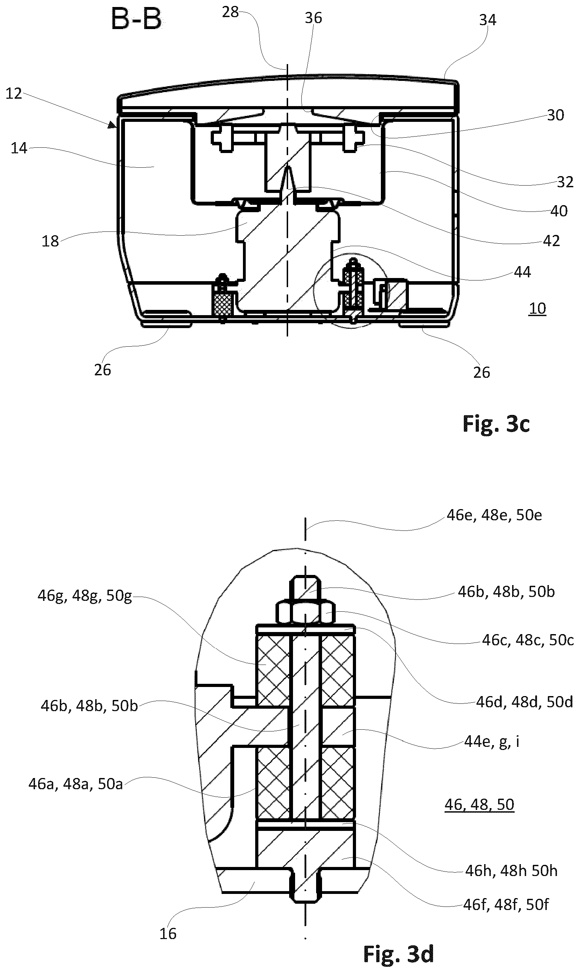

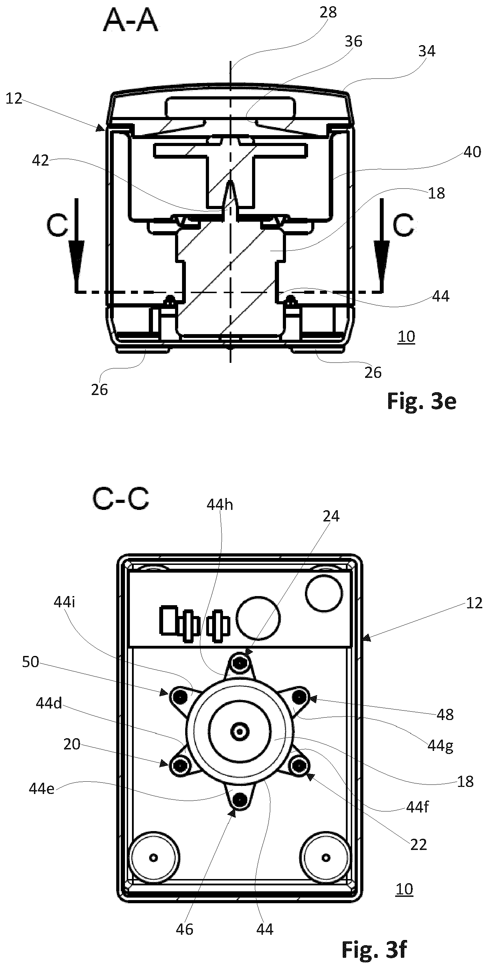

In den Fig. 3a bis 3f ist eine zweite Ausführungsform einer Laborzentrifuge 10 nach der Erfindung dargestellt. Im Folgenden werden für die gleichen Teile die gleichen Bezugszeichen verwendet. Zudem wird nur auf die Unterschiede zur Zentrifuge nach Fig. 1 und zur ersten Ausführungsform eingegangen.

Diese Ausführungsform hat insgesamt sechs Auflager, nämlich drei Auflager 20, 22, 24 gemäß der Fig. 1 sowie drei Auflager 46, 48, 50 gemäß der ersten Ausführungsform der Erfindung. Die Lagereinheit 44 weist somit auch sechs plattenförmige Vorsprünge 44d, 44e, 44f, 44g, 44h, 44i auf. Dabei ist jeweils der Vorsprung 44d dem Auflager 20, der Vorsprung 44e dem Auflager 22, der Vorsprung 44f dem Auflager 24, der Vorsprung 44g dem Auflager 46, der Vorsprung 44h dem Auflager 48 und der Vorsprung 44i dem Auflager 50 zugeordnet. Die Auflager 20, 22, 24, 46, 48, 50 sind auf der Bodenplatte 16 konzentrisch zur Motorachse 28 in gleichem Abstand angeordnet. Dabei ist gegen den Uhrzeigersinn jeweils neben dem Auflager 20 das Auflager 46, neben dem Auflager 46 das Auflager 22, neben dem Auflager 22 das Auflager 48, neben dem Auflager 48 das Auflager 24, neben dem Auflager 24 das Auflager 50, und neben dem Auflager 50 das Auflager 20 angeordnet. Somit sind im Wechsel die Art der Auflager 20, 22, 24 nach Fig. 1 mit der Art von Auflagern 46, 48, 50 der ersten Ausführungsform der Erfindung angeordnet. Dies hat den Vorteil, dass im Wesentlichen durch die Auflager 46, 48, 50 die geforderte Dämpfung der Lagereinheit 44 der Zentrifuge 10 erreicht wird und die Lager 20, 22, 24 nehmen dabei die Last des Motors mit Rotor auf, so dass die unteren und oberen Metallkissen gleich belastet sind. Dies ermöglicht, auf die Dämpfung optimierte Metallkissen einzusetzen. Die Last des Motors mit Rotor muss bei der Auslegung der Metallkissen nicht berücksichtigt werden.

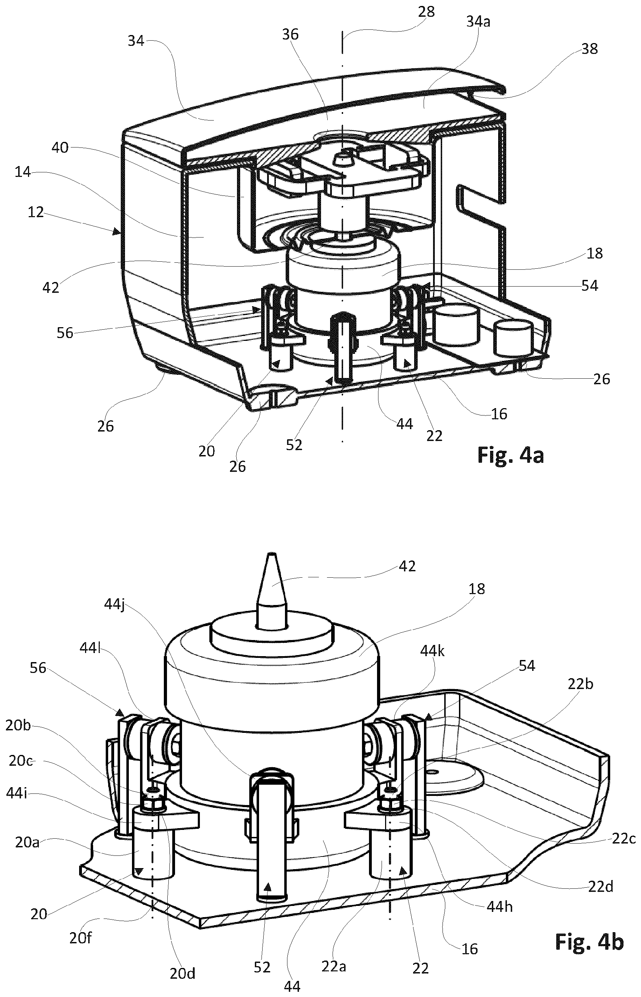

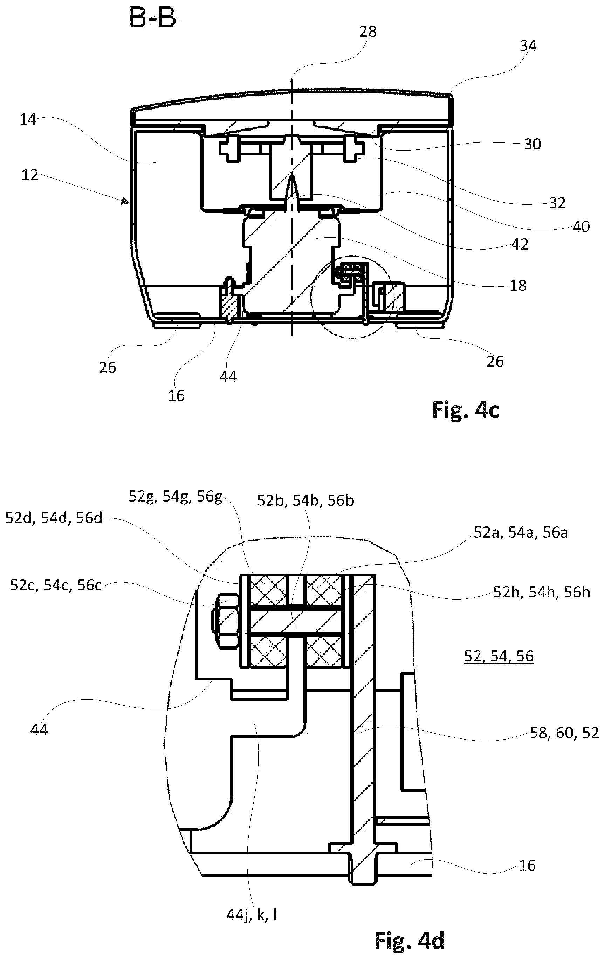

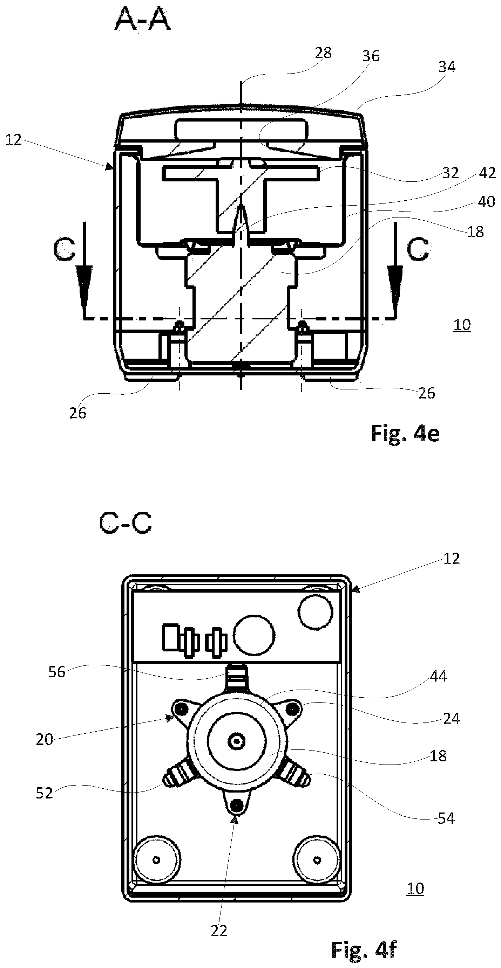

In den Fig. 4a bis 4f ist eine dritte Ausführungsform einer Laborzentrifuge 10 nach der Erfindung dargestellt. Im Folgenden werden für die gleichen Teile die gleichen Bezugszeichen verwendet. Zudem wird nur auf die Unterschiede zur ersten oder zweiten Ausführungsform nach der Erfindung sowie zur Zentrifug 10 nach Fig. 1 eingegangen.

Diese Ausführungsform hat, wie die zweite Ausführungsform, insgesamt sechs Auflager, nämlich drei Auflager 20, 22, 24 gemäß der Fig. 1 sowie drei Auflager 52, 54, 56 mit Horizontaldämpfung. Die Lagereinheit 44 weist für die Auflager 20, 22, 24 die drei plattenförmigen Vorsprünge 44d, 44f, 44h auf.

Dabei ist der Vorsprung 44d dem Auflager 20, der Vorsprung 44f dem Auflager 22, und der Vorsprung 44h dem Auflager 24 zugeordnet.

Zwischen diesen drei Vorsprüngen 44d, 44f, 44h der Lagereinheit 44 sind Lagerwinkel 44j, 44k, 44l vorgesehen. Ein Lagerwinkel 44j, 44k, 44l erstreckt sich zunächst horizontal von der Lagereinheit 44 weg und dann senkrecht nach oben parallel zur Motorachse 28. In radialem Abstand bezogen auf die Motorachse 28 ist zum Lagerwinkel 44j, 44k, 44l jeweils eine parallel zur Motorachse 28 von der Bodenplatte 16 nach oben sich erstreckende Auflagerplatte 58, 60, 62 vorgesehen.

Von der Auflagerplatte 58, 60, 62 ausgehend sind im Auflager 52, 54, 56 eine zweite Unterlegscheibe 52h, 54h, 56h, ein zweites hohlzylindrisches Metallkissen 52g, 54g, 56g, der Lagerwinkel 44j, 44k, 44l, ein erstes Metallkissen 52a, 54a, 56a, eine erste Unterlegscheibe 52d, 54d, 56d, eine Mutter 52c, 54c, 56c angeordnet. Eine Schraube 52b, 54b, 56b ist mit der Auflagerplatte 58, 60, 62 verschraubt und durchgreift die zweite Unterlegscheibe 52h, 54h, 56h, das zweite hohlzylindrische Metallkissen 52g, 54g, 56g, den Lagerwinkel 44j, 44k, 44l, das erste Metallkissen 52a, 54a, 56a und die erste Unterlegscheibe 52d, 54d, 56d. Die Mutter 52c, 54c, 56c ist auf die Schraube 52b, 54b, 56b aufgeschraubt und drückt auf die erste Unterlegscheibe 52d, 54d, 56d und das erste Metallkissen 52a, 54a, 56a.

Die Auflager 20, 22, 24, 52, 54, 56 sind auf der Bodenplatte 16 konzentrisch zur Motorachse 28 in gleichem Abstand angeordnet, dabei ist gegen den Uhrzeigersinn neben dem Auflager 20 das Auflager 52, neben dem Auflager 52 das Auflager 22, neben dem Auflager 22 das Auflager 54, neben dem Auflager 54 das Auflager 24, neben dem Auflager 24 das Auflager 56, und neben dem Auflager 56 das Auflager 20 angeordnet. Somit sind im Wechsel die erste Art der Auflager 20, 22, 24 der ersten Ausführungsform mit der dritten Art von Auflagern 52, 54, 56 angeordnet.

Die Auflager 52, 54, 56 weisen Federachsen 52e, 54e, 56e auf. Die Federachsen 52e, 54e, 56e der Auflager 52, 54, 56 sind senkrecht zur Motorachse 28 ausgerichtet. Die Lager wirken daher möglichen Auslenkungen des Motors 18 und des Rotors 32 entgegen.

Auch bei dieser Ausführungsform wird die Dämpfung im Wesentlichen von den Auflagern 52, 54 und 56 erreicht. Die Metallkissen werden dabei wiederum nur auf Druck beansprucht, so dass die Metallkissen ihre optimalen Dämpfungseigenschaften entfalten können. Die Gummikissen 20a, 22a, 24a nehmen dabei die Last des Motors mit Rotor auf. Dies ermöglicht, auf die Dämpfung optimierte Metallkissen einzusetzen.

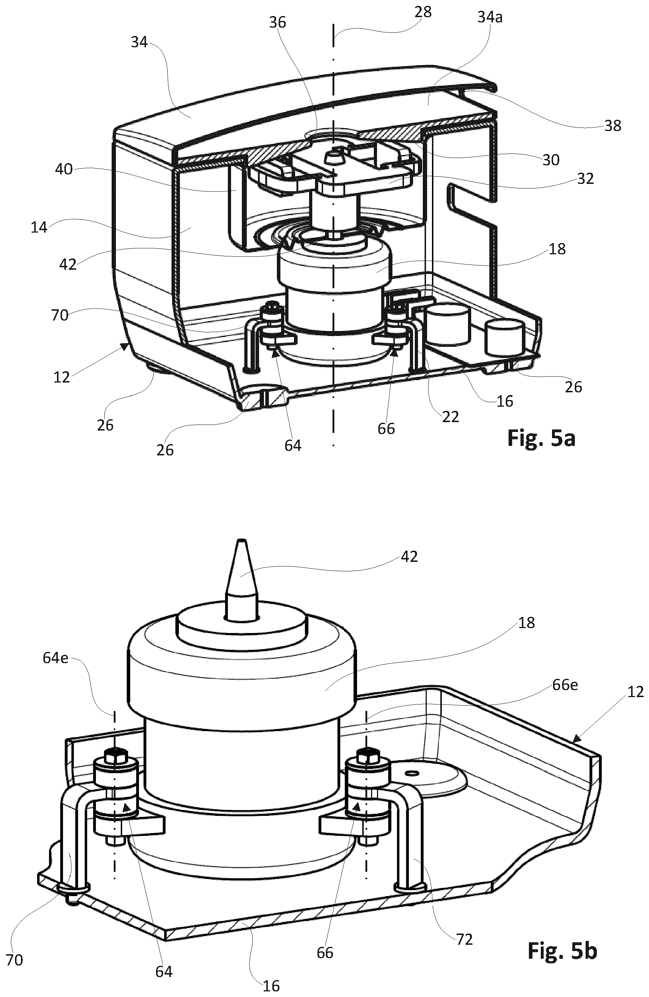

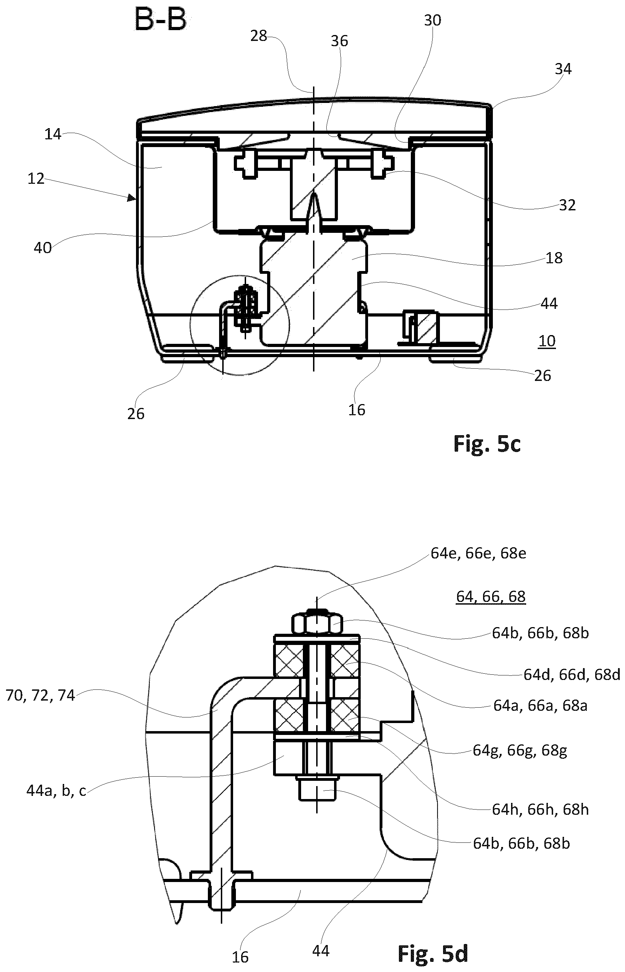

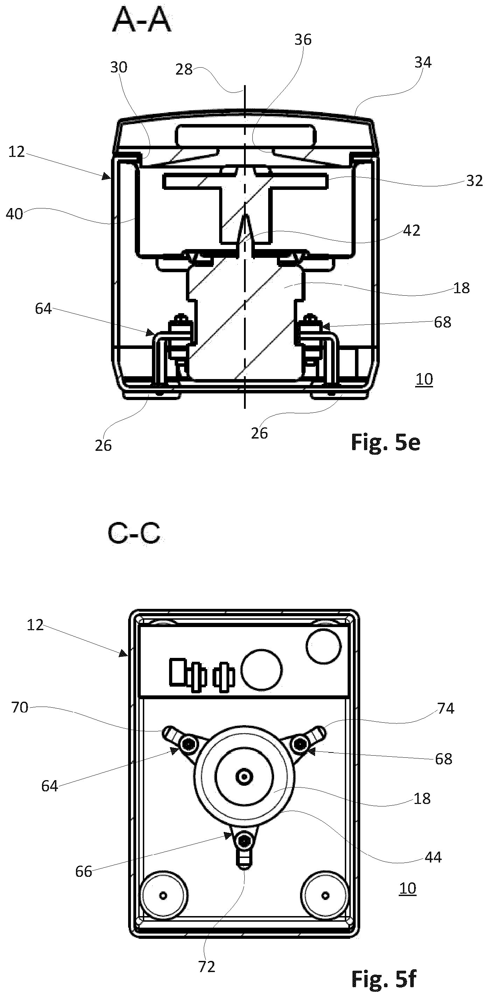

In den Fig. 5a bis 5f ist eine vierte Ausführungsform einer Laborzentrifuge 10 nach der Erfindung dargestellt. Im Folgenden werden für die gleichen Teile die gleichen Bezugszeichen verwendet. Zudem wird nur auf die Unterschiede zur ersten, zweiten, oderdritten Ausführungsform der Erfindung eingegangen.

Die Lagereinheit 44 ist wie die erste Ausführungsform ausgebildet. Es ist aber eine andere Auflagerkonstruktion verwendet worden. Es sind drei Auflager 64, 66, 68 vorgesehen, welche den plattenförmigen Vorsprüngen 44a, 44b, 44c zugeordnet sind. Radial beabstandet zum plattenförmigen Vorsprung 44a, 44b, 44c ist ein Haltewinkel 70, 72, 74 vorgesehen. Der Haltewinkel 70, 72, 74 erstreckt sich jeweils von der Bodenplatte 16 senkrecht nach oben und ist dann horizontal auf die Motorachse 28 abgewinkelt. Über die Haltewinkel 70, 72, 74 wird die Lagereinheit 44 getragen. Dabei sind jeweils ausgehend von dem plattenförmigen Vorsprung 44a, 44b, 44c eine zweite Unterlegscheibe 64h, 66h, 68h, ein zweites Metallkissen 64g, 66g, 68g, der Haltewinkel 70, 72, 74, ein erstes Metallkissen 64a, 66a, 68a, eine erste Unterlegscheibe 64d, 66d, 68d und eine Mutter 64c, 66c, 68c vorgesehen.

Eine Schraube 64b, 66b, 68b ist mit dem plattenförmigen Vorsprung 44a, 44b, 44c verschraubt und durchgreift die zweite Unterlegscheibe 64h, 66h, 68h, das zweite hohlzylindrische Metallkissen 64g, 66g, 68g, den Haltewinkel 70, 72, 74, das erste Metallkissen 64a, 66a, 68a und die erste Unterlegscheibe 64d, 66d, 68d. Die Mutter 64c, 66c, 68c ist auf die Schraube 64b, 66b, 68b aufgeschraubt und drückt auf die erste Unterlegscheibe 64d, 66d, 68d und das erste Metallkissen 64a, 66a, 68a.

Die Auflager 64, 66, 68 sind jeweils mit einer Federachse 64e, 66e, 68e versehen, welche parallel zur Motorachse 28 ausgerichtet ist. Jedoch steht die Lagereinheit nicht auf den Auflagern 20, 24, 26 gemäß der ersten Ausführungsform auf, sondern wird von den Auflagern 64, 66, 68 über den Haltewinkel 70, 72, 74 getragen. Dabei ist das erste Haltekissen 64a, 66a, 68a oberhalb des Haltewinkels 70, 72, 74 angeordnet und das zweite Haltekissen 64g, 66g, 68g zwischen dem plattenförmigen Vorsprung 44a, 44b, 44c der Lagereinheit 44 und dem Haltewinkel 70, 72, 74.

Bei dieser Ausführungsform hängt die Lagereinheit 44 und wird über die Metallkissen 64a, 66a, 68a in eine Richtung und die Metallkissen 64g, 66g, 68g in die andere Richtung gedämpft.

Die in den beschriebenen Ausführungsformen der Erfindung verwendeten Metallkissen sind zylindrisch ausgebildet und weisen einen Außendurchmesser in einem Bereich von 12 mm bis einschließlich 50 mm auf. Der Innendurchmesser liegt dabei in einem Bereich von 4 mm bis 12 mm. Die Unterlegscheiben bedecken dabei die Stirnseite des Metallkissens vollständig. Die Schraube durchgreift das Metallkissen jeweils so, dass dieses gegenüber der Schraube frei beweglich bleibt.

Durch die verschiedenen Ausführungsformen können verschiedene Anwendungen der Zentrifuge 10 optimiert werden. Dabei bewirken die Metallkissen eine maximale Auslenkung auf Höhe des Rotors von weniger als 2 mm, insbesondere weniger als 1,5 mm. In Höhe der Metallkissen ist die maximale Auslenkung weniger als 1 mm, vorzugsweise weniger als 0,9 mm.

Das Metallkissen kann dabei durch einen Stahldraht gebildet sein, der Chrom-Nickel umfasst und nichtrostend ausgebildet ist. Der Durchmesser des Stahldrahts liegt in einem Bereich von 0,05 mm bis einschließlich 0,5 mm.

Der Dämpfungsbeiwert k der in den einzelnen Ausführungsformen verwendeten Metallkissen liegt bei einer vorgegebenen Erregerfrequenz in folgenden Bereichen:
- Erregerfrequenz von 1 Hz, der Dämpfungsbeiwert k liegt zwischen 500 und 8.000 Ns/m;
- Erregerfrequenz von 10 Hz, der Dämpfungsbeiwert k liegt zwischen 300 und 5.000 Ns/m;
- Erregerfrequenz von 20 Hz, der Dämpfungsbeiwert k liegt zwischen 200 und 2.500 Ns/m;
- Erregerfrequenz von 50 Hz, der Dämpfungsbeiwert k liegt zwischen 80 und 1.200 Ns/m;
- Erregerfrequenz von 100 Hz, der Dämpfungsbeiwert k liegt zwischen 40 und 500 Ns/m.

Durch den Einsatz der beschriebenen Metallkissen anstelle der bisher üblichen Gummielemente oder zusätzlich zu den bisher üblichen Gummielementen wird eine große Unwuchtverträglichkeit bei geringem Bauraum geschaffen.

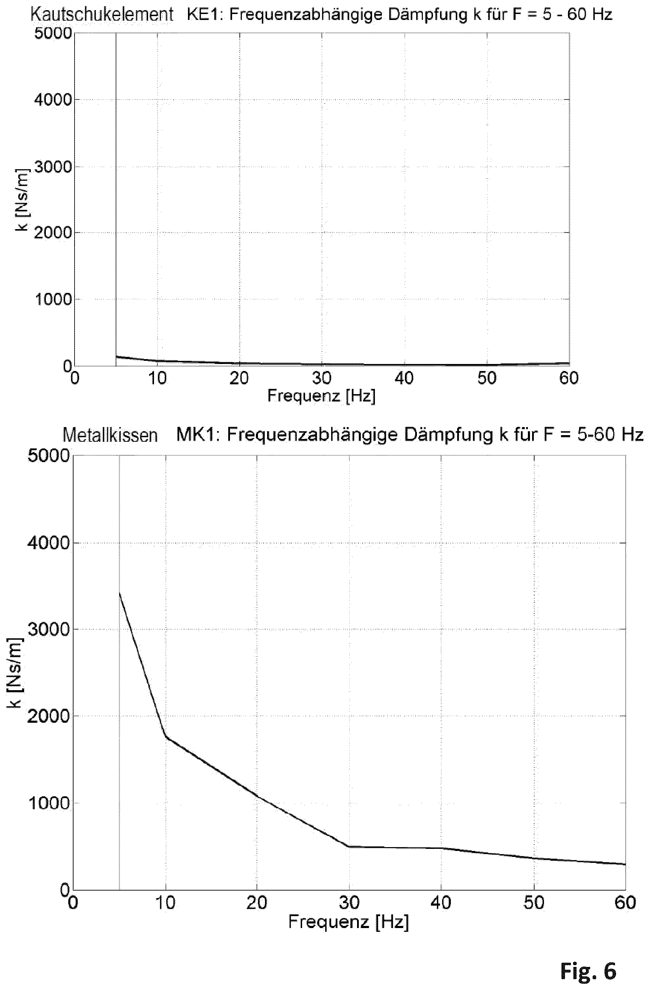

Dies ergibt sich durch folgenden Vergleich zwischen einem Metallkissen, wie es oben beschrieben wurde, und einem herkömmlich verwendeten Gummielement/Kautschukelement:
Bei den eingesetzten Kautschukelementen sinkt die Dämpfungszahl ausgehend von einem sehr geringen Wert mit steigender Erregerfrequenz ab. Ab einer Frequenz von ca. 30 Hz ist praktisch keine Dämpfung mehr vorhanden, siehe Fig. 6, nämlich Diagramme zur Auslenkung der Motorachse oben (im Bereich des Rotors) und unten (im Bereich der Lagerung, also der Dämpfungselemente).

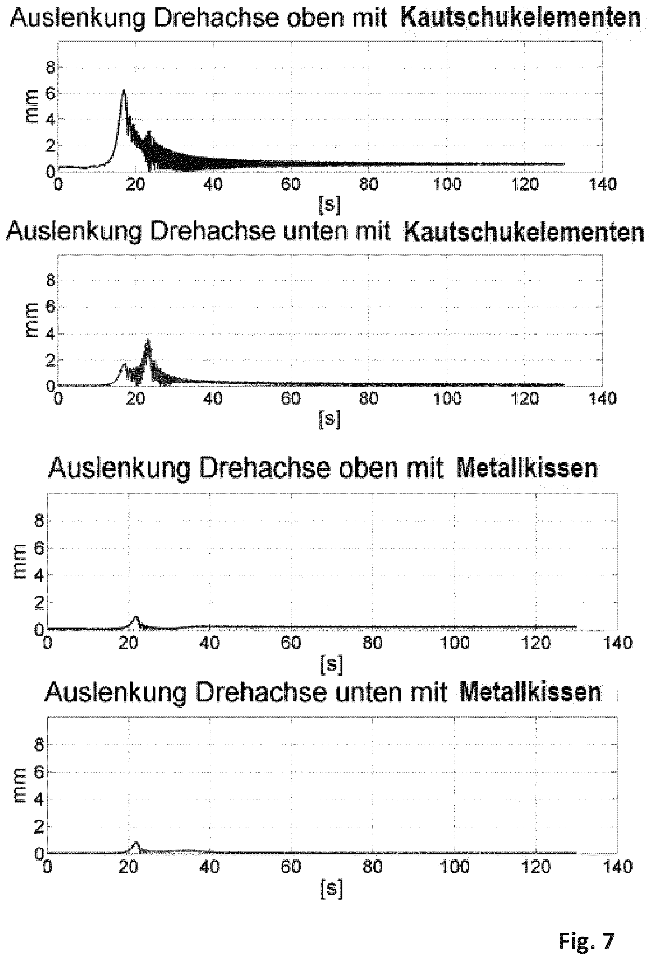

In Abhängigkeit von der Zeit wird das Frequenzspektrum durchfahren. Der Rotor wird vom Stillstand auf Nenndrehzahl beschleunigt, siehe Fig. 7.

Es ist in Fig. 7 zu erkennen, dass durch den erfindungsgemäßen Einsatz der Metallkissen die Auslenkung von ca. 6 mm auf ca. 1 mm reduziert werden kann. Im Umkehrschluss kann in der gleichen Zentrifuge bei unveränderten Abmessungen (Abstand Rotor zu Zentrifugenkessel) die zulässige Unwucht deutlich erhöht werden.

### Bezugszeichenliste

- 10: Laborzentrifuge
- 12: Zentrifugengehäuse
- 14: Innenraum des Zentrifugengehäuses 12
- 16: Bodenplatte
- 18: Motor
- 20: Auflager - links - erste Art
- 20a: Metallkissen
- 20b: Schraube
- 20c: Mutter
- 20d: Unterlegscheibe
- 20e: Federachse
- 22: Auflager - vorne - erste Art
- 22a: Metallkissen
- 22b: Schraube
- 22c: Mutter
- 22d: Unterlegscheibe
- 22e: Federachse
- 24: Auflager - rechts - erste Art
- 24a: Metallkissen
- 24b: Schraube
- 24c: Mutter
- 24d: Unterlegscheibe
- 24e: Federachse
- 26: Fuß der Bodenplatte 16
- 28: Motorachse/Rotorachse
- 30: Ausnehmung im Zentrifugengehäuse 12
- 32: Rotor
- 34: Zentrifugendeckel
- 34a: Strömungskanal
- 36: Lüftungsöffnung - konzentrisch
- 38: Lüftungsöffnung - seitlich
- 40: Sicherheitskessel
- 42: Antriebswelle
- 44: Lagereinheit für den Motor 18
- 44a: plattenförmiger Vorsprung - dem Auflager 20 bzw. 46 zugeordnet
- 44b: plattenförmiger Vorsprung - dem Auflager 22 bzw. 48 zugeordnet
- 44c: plattenförmiger Vorsprung - dem Auflager 24 bzw. 50 zugeordnet
- 44d: plattenförmiger Vorsprung - dem Auflager 20 zugeordnet
- 44e: plattenförmiger Vorsprung - dem Auflager 46 zugeordnet
- 44f: plattenförmiger Vorsprung - dem Auflager 22 zugeordnet
- 44g: plattenförmiger Vorsprung - dem Auflager 48 zugeordnet
- 44h: plattenförmiger Vorsprung - dem Auflager 24 zugeordnet
- 44i: plattenförmiger Vorsprung - dem Auflager 50 zugeordnet
- 44j: Lagerwinkel - dem Auflager 52 zugeordnet
- 44k: Lagerwinkel - dem Auflager 54 zugeordnet
- 44l: Lagerwinkel - dem Auflager 56 zugeordnet
- 46: Auflager - links - zweite Art
- 46a: erstes Metallkissen
- 46b: Schraube
- 46c: Mutter
- 46d: erste Unterlegscheibe
- 46e: Federachse
- 46f: Lagerabsatz
- 46g: zweites Metallkissen
- 46h: zweite Unterlegscheibe
- 48: Auflager - Mitte - zweite Art
- 48a: erstes Metallkissen
- 48b: Schraube
- 48c: Mutter
- 48d: erste Unterlegscheibe
- 48e: Federachse
- 48f: Lagerabsatz
- 48g: zweites Metallkissen
- 48h: zweite Unterlegscheibe
- 50: Auflager - rechts - zweite Art
- 50a: erstes Metallkissen
- 50b: Schraube
- 50c: Mutter
- 50d: erste Unterlegscheibe
- 50e: Federachse
- 50f: Lagerabsatz
- 50g: zweites Metallkissen
- 50h: zweite Unterlegscheibe
- 52: Auflager - links - dritte Art
- 52a: erstes Metallkissen
- 52b: Schraube
- 52c: Mutter
- 52d: erste Unterlegscheibe
- 52e: Federachse
- 52g: zweites Metallkissen
- 52h: zweite Unterlegscheibe
- 54: Auflager - Mitte - dritte Art
- 54a: erstes Metallkissen
- 54b: Schraube
- 54c: Mutter
- 54d: erste Unterlegscheibe
- 54e: Federachse
- 54g: zweites Metallkissen
- 54h: zweite Unterlegscheibe
- 56: Auflager - rechts - dritte Art
- 56a: erstes Metallkissen
- 56b: Schraube
- 56c: Mutter
- 56d: erste Unterlegscheibe
- 56e: Federachse
- 56g: zweites Metallkissen
- 56h: zweite Unterlegscheibe
- 58: Auflagerplatte des Auflagers 52
- 60: Auflagerplatte des Auflagers 54
- 62: Auflagerplatte des Auflagers 56
- 64: Auflager
- 64a: erstes Metallkissen
- 64b: Schraube
- 64c: Mutter
- 64d: erste Unterlegscheibe
- 64e: Federachse
- 64g: zweites Metallkissen
- 64h: zweite Unterlegscheibe
- 66: Auflager
- 66a: erstes Metallkissen
- 66b: Schraube
- 66c: Mutter
- 66d: erste Unterlegscheibe
- 66e: Federachse
- 66g: zweites Metallkissen
- 66h: zweite Unterlegscheibe
- 68: Auflager
- 68a: erstes Metallkissen
- 68b: Schraube
- 68c: Mutter
- 68d: erste Unterlegscheibe
- 68e: Federachse
- 68g: zweites Metallkissen
- 68h: zweite Unterlegscheibe
- 70: Haltewinkel
- 72: Haltewinkel
- 74: Haltewinkel

## Patentansprüche

1. Zentrifuge (10), insbesondere Laborzentrifuge, aufweisend
a) einen Rotor (32) zur Aufnahme von Behältern mit Zentrifugiergut,
b) eine Antriebswelle (42) , auf der der Rotor (32) gelagert ist,
c) einen Motor (18), der über die Antriebswelle (42) den Rotor (32) antreibt,
d) eine Lagereinheit (44) mit Lagern (46, 48, 50, 52, 54, 56; 64, 66, 68), die jeweils eine Federachse (46e, 48e, 50e; 52e, 54e, 56e; 64e, 66e, 68e) umfassende Dämpfungselemente (46a. 48a, 50a; 52a, 54a, 56a, 64a, 66a, 68a) aufweisen, und
e) ein Trägerelement (16) zur Festlegung des Motors (18) über die Lagereinheit (44) in der Zentrifuge (10),
wobei zumindest ein Dämpfungselement vollständig aus Metall und als Metallkissen (46a. 48a, 50a; 46g, 48g, 50g; 52a, 54a, 56a; 52g, 54g, 56g; 64a, 66a, 68a; 64g, 66g, 68g) umfassend ein Drahtgestrick mit elastischen Eigenschaften ausgebildet ist, **dadurch gekennzeichnet, dass** zwei Metallkissen (46a, 48a, 50a; 46g, 48g, 50g; 52a, 54a, 56a; 52g, 54g, 56g; 64a, 66a, 68a; 64g, 66g, 68g) zusammen ein Dämpfungselement bilden, wobei das erste Metallkissen (46a, 48a, 50a, 52a, 54a, 56a; 64a, 66a, 68a) in einer ersten Richtung einer Auslenkung und das zweite Metallkissen (46g, 48g, 50g; 52g, 54g, 56g; 64g, 66g, 68g) in einer zweiten Richtung einer Auslenkung des Rotors (32) entgegenwirkt, wobei die Lagereinheit (44) zumindest ein Lager (46, 48, 50) mit einer Lagerplatte (44a, 44b, 44c; 44d, 44e, 44f; 44g, 44h, 44i; 44j, 44k, 441) aufweist, wobei auf der einen Seite der Lagerplatte (44a, 44b, 44c; 44d, 44e, 44f; 44g, 44h, 44i; 44j, 44k, 441) das erste Metallkissen (46a, 48a, 50a; ) 52a, 54a, 56a; 64a, 66a, 68a und auf der zweiten Seite der Lagerplatte (44a, 44b, 44c) das zweite Metallkissen (46g, 48g, 50g; 52g, 54g, 56g; 64g, 66g, 68g) angeordnet ist, wobei ein Führungsstift (46b, 48b, 50b; 52b, 54b, 56b; 64b, 66b, 68b) das erste Metallkissen (46a, 48a, 50a; 52a, 54a, 56a; 64a, 66a, 68a), das an der Lagerplatte (44a, 44b, 44c; 44d, 44e, 44f; 44g, 44h, 44i; 44j, 44k, 44l) mittelbar oder unmittelbar anliegt, die Lagerplatte (44a, 44b, 44c; 44d, 44e, 44f; 44g, 44h, 44i; 44j, 44k, 441) und das zweite Metallkissen (46g, 48g, 50g; 52g, 54g, 56g; 64g, 66g, 68g), das an der Lagerplatte (44a, 44b, 44c; 44d, 44e, 44f; 44g, 44h, 44i; 44j, 44k, 441) und dem Trägerelement (16) mittelbar oder unmittelbar anliegt, durchgreift, wobei der Führungsstift (46b, 48b, 50b; 52b, 54b, 56b; 64b, 66b, 68b) auf der einen Seite fest mit dem Trägerelement (16) verbunden ist, und auf der anderen Seite einen Kopf aufweist, der an dem ersten Metallkissen (46a, 48a, 50a; 52a, 54a, 56a; 64a, 66a, 68a) mittelbar oder unmittelbar anliegt, wobei das erste Metallkissen (46a, 48a, 50a; 52a, 54a, 56a; 64a, 66a, 68a), die Lagerplatte (44a, 44b, 44c) und das zweite Metallkissen (46g, 48g, 50g; 52g, 54g, 56g; 64g, 66g, 68g) gegenüber dem Führungsstift (46b, 48b, 50b; 52b, 54b, 56b; 64b, 66b, 68b) frei beweglich sind.

2. Zentrifuge nach Anspruch 1, **dadurch gekennzeichnet, dass** die zweite Richtung einer der ersten Richtung entgegengesetzten Richtung einer Auslenkung des Rotors (32) entspricht.

3. Zentrifuge nach Anspruch 1 oder 2, **dadurch gekennzeichnet, dass** die Metallkissen (46a. 48a, 50a; 46g, 48g, 50g; 52a, 54a, 56a; 52g, 54g, 56g; 64a, 66a, 68a; 64g, 66g, 68g) zylindrisch ausgebildet sind.

4. Zentrifuge nach einem der vorangehenden Ansprüche, **dadurch gekennzeichnet, dass** die Dämpfungselemente (20a, 22a, 24a; 46a, 48a, 50a; 52a, 54a, 56a; 64a, 66a, 68a) verschiedener Lager (20, 22, 24; 46, 48, 50; 52, 54, 56; 64, 66, 68) unterschiedlich ausgebildet sind, insbesondere sind die Dämpfungselemente (46a, 48a, 50a; 52a, 54a, 56a; 64a, 66a, 68a) eines ersten Lagers (46, 48, 50; 52, 54, 56; 64, 66, 68) im Hinblick auf die Dämpfung optimiert, und die Dämpfungselemente (20, 22, 24) eines zweiten Lagers (20, 22, 24) im Hinblick auf die Aufnahme der Gewichtskraft optimiert sind, vorzugsweise ist dabei ein Dämpfungselement zumindest ein Metallkissen (46a,48a, 50a; 52a, 54a, 56a; 64, 66, 68) und das andere Dämpfungselement (20a, 20b, 20c) zumindest Kautschuk umfasst.

5. Zentrifuge nach einem der vorangehenden Ansprüche, **dadurch gekennzeichnet, dass** der Abstand in Umfangsrichtung bezogen auf die Antriebsachse (42) benachbarter Dämpfungselemente (20a, 20b, 20c; 46a, 48a, 50a; 52a, 54a, 56a; 64, 66, 68) zueinander gleich ist.

6. Zentrifuge nach einem der vorangehenden Ansprüche, **dadurch gekennzeichnet, dass** zumindest eine Federachse (52e, 54e, 56e) eines Dämpfungselements senkrecht zur Antriebswelle (42) ausgerichtet ist.

7. Zentrifuge nach einem der vorangehenden Ansprüche, **dadurch gekennzeichnet, dass** zumindest eine Federachse (20e, 20e, 20e; 46e, 48e, 50e; 64e, 66e, 68e) eines Dämpfungselements (20a, 22a, 24a; 46a, 48a, 50a; 64a, 66a, 68a) parallel zur Antriebswelle (42) ausgerichtet ist.

8. Zentrifuge nach Anspruch 6 oder 7, **dadurch gekennzeichnet, dass** mehrere Lager (20, 22, 24; 52, 54, 56) mit Dämpfungselementen (20a, 22a, 24a; 52a, 54a, 56a) vorgesehen sind, wobei die Federachsen (52e, 54e, 56e) der Hälfte der Dämpfungselemente (52a, 54a, 56a) senkrecht zur Antriebswelle (42) und die Federachsen (20e, 22e, 24e) der anderen Hälfte der Dämpfungselemente (20a, 22a, 24a) parallel zur Antriebswelle (42) ausgerichtet sind.

9. Zentrifuge nach einem der Ansprüche 6 bis 8, **dadurch gekennzeichnet, dass** abwechselnd die Federachsen (52e, 54e, 56e) der Dämpfungselemente (52a, 54a, 56a) senkrecht zur Antriebswelle (42) und die Federachsen (20e, 22e, 24e) der Dämpfungselemente (20a, 22a, 24a) parallel zur Antriebswelle (42) ausgerichtet sind.

10. Zentrifuge nach einem der vorangehenden Ansprüche, **dadurch gekennzeichnet, dass** die Dämpfungselemente (46a, 48a, 50a; 52a, 54a, 56a; 62, 64, 66) eine maximale Auslenkung im Bereich des Rotors (32) von weniger als 2 mm zulassen, insbesondere von weniger als 1,5 mm.

11. Zentrifuge nach einem der vorangehenden Ansprüche, **dadurch gekennzeichnet, dass** die Dämpfungselemente (46a, 48a, 50a; 52a, 54a, 56a, 64a, 66a, 68a) eine maximale Auslenkung im Bereich des Dämpfungselements (20a, 22a, 24a) von weniger als 1 mm zulassen, insbesondere von weniger als 0,9 mm.

12. Zentrifuge nach einem der vorangehenden Ansprüche, **dadurch gekennzeichnet, dass** drei Dämpfungselemente (20a, 22a, 24a; 46a. 48a, 50a; 52a, 54a, 56a, 64a, 66a, 68a) vorgesehen ist, deren Federachse (20e, 22e, 24e; 46e, 48e, 50e; 52e, 54e, 56e; 64e, 66e, 68e) jeweils gleich ausgerichtet ist.

13. Zentrifuge nach einem der vorangehenden Ansprüche, **dadurch gekennzeichnet, dass** eine Scheibe (20d, 22d, 24d; 46d. 48d, 50d; 52d, 54d, 56d, 64d, 66d, 68d), insbesondere eine Metallscheibe, das Dämpfungselement (20a, 22a, 24a; 46a. 48a, 50a; 52a, 54a, 56a, 64a, 66a, 68a) in Richtung der Federachse (20e, 22e, 24e; 46e. 48e, 50e; 52e, 54e, 56e, 64e, 66e, 68e) auf einer Seite begrenzt, insbesondere bedeckt dabei die Scheibe (20d, 22d, 24d; 46d. 48d, 50d; 52d, 54d, 56d, 64d, 66d, 68d) das Dämpfungselement (20a, 22a, 24a; 46a. 48a, 50a; 52a, 54a, 56a, 64a, 66a, 68a) in Richtung Federachse (20e, 22e, 24e; 46e. 48e, 50e; 52e, 54e, 56e, 64e, 66e, 68e) vollständig bedeckt.

14. Zentrifuge nach einem der vorangehenden Ansprüche, **dadurch gekennzeichnet, dass** das Metallkissen (46a. 48a, 50a; 52a, 54a, 56a, 64a, 66a, 68a) durch einen Stahldraht gebildet ist, der Chrom-Nickel beinhaltet, insbesondere der Stahldraht dabei einen Durchmesser von 0,05 mm bis einschließlich 0,5 mm aufweist.

15. Zentrifuge nach einem der vorangehenden Ansprüche, **dadurch gekennzeichnet, dass** das Metallkissen (46a. 48a, 50a; 52a, 54a, 56a, 64a, 66a, 68a) einen Außendurchmesser von 12 mm bis einschließlich 50 mm aufweist, und/oder dass das Metallkissen (46a. 48a, 50a; 52a, 54a, 56a, 64a, 66a, 68a) als Hohlzylinder ausgebildet ist, insbesondere mit einem Innendurchmesser von 4 mm bis 12 mm.

16. Zentrifuge nach einem der vorangehenden Ansprüche, **dadurch gekennzeichnet, dass** der Dämpfungsbeiwert k des Metallkissens (46a. 48a, 50a; 52a, 54a, 56a, 64a, 66a, 68a) bei einer
- Erregerfrequenz von 1 Hz zwischen 500 und 8.000 Ns/m liegt;
- Erregerfrequenz von 10 Hz zwischen 300 und 5.000 Ns/m liegt;
- Erregerfrequenz von 20 Hz zwischen 200 und 2.500 Ns/m liegt;
- Erregerfrequenz von 50 Hz zwischen 80 und 1.200 Ns/m liegt;
- Erregerfrequenz von 100 Hz zwischen 40 und 500 Ns/m liegt.
und/oder dass die Steifigkeit (c) des Metallkissens (46a. 48a, 50a; 52a, 54a, 56a, 64a, 66a, 68a) in einem Bereich von 3 N/mm bis 300 N/mm liegt.

## Claims

1. Centrifuge (10), in particular laboratory centrifuge, comprising:
a) a rotor (32) for receiving containers with material to be centrifuged,
b) a drive shaft (42) on which the rotor (32) is mounted,
c) a motor (18) which drives the rotor (32) via the drive shaft (42),
d) a bearing unit (44) having bearings (46, 48, 50, 52, 54, 56; 64, 66, 68) which each have damping elements (46a, 48a, 50a; 52a, 54a, 56a, 64a, 66a, 68a) comprising a spring axis (46e, 48e, 50e; 52e, 54e, 56e; 64e, 66e, 68e), and
e) a carrier element (16) for fixing the motor (18) in the centrifuge (10) via the bearing unit (44), wherein at least one damping element is made completely from metal and formed as a metal cushion (46a, 48a, 50a; 46g, 48g, 50g; 52a, 54a, 56a; 52g, 54g, 56g; 64a, 66a, 68a; 64g, 66g, 68g) comprising a wire knit having elastic properties, **characterized in that** two metal cushions (46a, 48a, 50a; 46g, 48g, 50g; 52a, 54a, 56a; 52g, 54g, 56g; 64a, 66a, 68a; 64g, 66g, 68g) together form a damping element, wherein the first metal cushion (46a, 48a, 50a, 52a, 54a, 56a; 64a, 66a, 68a) counteracts a deflection of the rotor (32) in a first direction and the second metal cushion (46g, 48g, 50g; 52g, 54g, 56g; 64g, 66g, 68g) counteracts a deflection of the rotor (32) in a second direction, wherein the bearing unit (44) comprises at least one bearing (46, 48, 50) with a bearing plate (44a, 44b, 44c; 44d, 44e, 44f; 44g, 44h, 44i; 44j, 44k, 44l), wherein on one side of the bearing plate (44a, 44b, 44c; 44d, 44e, 44f; 44g, 44h, 44i; 44j, 44k, 44l) the first metal cushion (46a, 48a, 50a; 52a, 54a, 56a; 64a, 66a, 68a) is arranged and on the second side of the bearing plate (44a, 44b, 44c) the second metal cushion (46g, 48g, 50g; 52g, 54g, 56g; 64g, 66g, 68g) is arranged, wherein a guide pin (46b, 48b, 50b; 52b, 54b, 56b; 64b, 66b, 68b) extends through the first metal cushion (46a, 48a, 50a; 52a, 54a, 56a; 64a, 66a, 68a), which rests directly or indirectly against the bearing plate (44a, 44b, 44c; 44d, 44e, 44f; 44g, 44h, 44i; 44j, 44k, 44l), the bearing plate (44a, 44b, 44c; 44d, 44e, 44f; 44g, 44h, 44i; 44j, 44k, 44l) and the second metal cushion (46g, 48g, 50g; 52g, 54g, 56g; 64g, 66g, 68g), which rests directly or indirectly against the bearing plate (44a, 44b, 44c; 44d, 44e, 44f; 44g, 44h, 44i; 44j, 44k, 44l) and the carrier element (16), wherein the guide pin (46b, 48b, 50b; 52b, 54b, 56b; 64b, 66b, 68b) is fixedly connected to the carrier element (16) on one side and has a head on the other side which bears indirectly or directly against the first metal cushion (46a, 48a, 50a; 52a, 54a, 56a; 64a, 66a, 68a), wherein the first metal cushion (46a, 48a, 50a; 52a, 54a, 56a; 64a, 66a, 68a), the bearing plate (44a, 44b, 44c) and the second metal cushion (46g, 48g, 50g; 52g, 54g, 56g; 64g, 66g, 68g) are freely movable relative to the guide pin (46b, 48b, 50b; 52b, 54b, 56b; 64b, 66b, 68b).

2. Centrifuge according to claim 1, **characterized in that** the second direction corresponds to a direction of a deflection of the rotor (32) which is opposite to the first direction.

3. Centrifuge according to any one of claims 1 or 2 above, **characterized in that** the metal cushions (46a, 48a, 50a; 46g, 48g, 50g; 52a, 54a, 56a; 52g, 54g, 56g; 64a, 66a, 68a; 64g, 66g, 68g) are cylindrical in shape.

4. Centrifuge according to any one of the preceding claims, **characterized in that** the damping elements (20a, 22a, 24a; 46a, 48a, 50a; 52a, 54a, 56a; 64a, 66a, 68a) of different bearings (20, 22, 24; 46, 48, 50; 52, 54, 56; 64, 66, 68) are designed differently, in particular the damping elements (46a, 48a, 50a; 52a, 54a, 56a; 64a, 66a, 68a) of a first bearing (46, 48, 50; 52, 54, 56; 64, 66, 68) are optimized with respect to damping, and the damping elements (20, 22, 24) of a second bearing (20, 22, 24) are optimized with respect to absorbing the weight force, with preferably one damping element comprising at least one metal cushion (46a, 48a, 50a; 52a, 54a, 56a; 64, 66, 68) and the other damping element (20a, 20b, 20c) comprising at least natural rubber.

5. Centrifuge according to any one of the preceding claims, **characterized in that** the circumferential spacing, relative to the drive shaft (42), between adjacent damping elements (20a, 20b, 20c; 46a, 48a, 50a; 52a, 54a, 56a; 64, 66, 68) is the same.

6. Centrifuge according to any one of the preceding claims, **characterized in that** at least one spring axis (52e, 54e, 56e) of a damping element is aligned perpendicular to the drive shaft (42).

7. Centrifuge according to any one of the preceding claims, **characterized in that** at least one spring axis (20e, 22e, 24e; 46e, 48e, 50e; 64e, 66e, 68e) of a damping element (20a, 22a, 24a; 46a, 48a, 50a; 64a, 66a, 68a) is aligned parallel to the drive shaft (42).

8. Centrifuge according to any one of claims 6 or 7 above, **characterized in that** multiple bearings (20, 22, 24; 52, 54, 56) with damping elements (20a, 22a, 24a; 52a, 54a, 56a) are provided, wherein the spring axes (52e, 54e, 56e) of half of the damping elements (52a, 54a, 56a) are aligned perpendicular to the drive shaft (42), and the spring axes (20e, 22e, 24e) of the other half of the damping elements (20a, 22a, 24a) are aligned parallel to the drive shaft (42).

9. Centrifuge according to any one of claims 6 to 8 above, **characterized in that** alternatingly the spring axes (52e, 54e, 56e) of the damping elements (52a, 54a, 56a) are aligned perpendicular to the drive shaft (42), and the spring axes (20e, 22e, 24e) of the damping elements (20a, 22a, 24a) are aligned parallel to the drive shaft (42).

10. Centrifuge according to any one of the preceding claims, **characterized in that** the damping elements (46a, 48a, 50a; 52a, 54a, 56a; 62, 64, 66) allow for a maximum deflection in the region of the rotor (32) of less than 2 mm, in particular of less than 1.5 mm.

11. Centrifuge according to any one of the preceding claims, **characterized in that** the damping elements (46a, 48a, 50a; 52a, 54a, 56a, 64a, 66a, 68a) allow for a maximum deflection in the region of the damping element (20a, 22a, 24a) of less than 1 mm, in particular of less than 0.9 mm.

12. Centrifuge according to any one of the preceding claims, **characterized in that** three damping elements (20a, 22a, 24a; 46a, 48a, 50a; 52a, 54a, 56a, 64a, 66a, 68a) are provided, the spring axis (20e, 22e, 24e; 46e, 48e, 50e; 52e, 54e, 56e; 64e, 66e, 68e) of each of which is aligned identically.

13. Centrifuge according to any one of the preceding claims, **characterized in that** a washer (20d, 22d, 24d; 46d, 48d, 50d; 52d, 54d, 56d, 64d, 66d, 68d), in particular a metal washer, delimits the damping element (20a, 22a, 24a; 46a, 48a, 50a; 52a, 54a, 56a, 64a, 66a, 68a) in the direction of the spring axis (20e, 22e, 24e; 46e. 48e, 50e; 52e, 54e, 56e, 64e, 66e, 68e) on one side, in particular the washer (20d, 22d, 24d; 46d, 48d, 50d; 52d, 54d, 56d, 64d, 66d, 68d) covers the entire damping element (20a, 22a, 24a; 46a, 48a, 50a; 52a, 54a, 56a, 64a, 66a, 68a) in the direction of the spring axis (20e, 22e, 24e; 46e, 48e, 50e; 52e, 54e, 56e, 64e, 66e, 68e).

14. Centrifuge according to any one of the preceding claims, **characterized in that** the metal cushion (46a, 48a, 50a; 52a, 54a, 56a, 64a, 66a, 68a) is formed by a steel wire containing chromium-nickel, in particular the steel wire is of between 0.05 mm and 0.5 mm inclusive in diameter.

15. Centrifuge according to any one of the preceding claims, **characterized in that** the outer diameter of the metal cushion (46a, 48a, 50a; 52a, 54a, 56a, 64a, 66a, 68a) is of between 12 mm and 50 mm inclusive, and/or the metal cushion (46a, 48a, 50a; 52a, 54a, 56a, 64a, 66a, 68a) is designed as a hollow cylinder, in particular with an inner diameter of between 4 mm and 12 mm.

16. Centrifuge according to any one of the preceding claims, **characterized in that** the damping coefficient k of the metal cushion (46a, 48a, 50a; 52a, 54a, 56a, 64a, 66a, 68a) is
- between 500 and 8,000 Ns/m for an excitation frequency of 1 Hz;
- between 300 and 5,000 Ns/m for an excitation frequency of 10 Hz;
- between 200 and 2,500 Ns/m for an excitation frequency of 20 Hz;
- between 80 and 1,200 Ns/m for an excitation frequency of 50 Hz;
- between 40 and 500 Ns/m for an excitation frequency of 100 Hz;
and/or that the stiffness (c) of the metal cushion (46a, 48a, 50a; 52a, 54a, 56a, 64a, 66a, 68a) is in a range of between 3 N/mm and 300 N/mm.

## Revendications

1. Centrifugeuse (10), en particulier centrifugeuse de laboratoire, présentant
a) un rotor (32) pour la réception de récipients avec la matière à centrifuger,
b) un arbre d'entraînement (42), sur lequel le rotor (32) est monté,
c) un moteur (18), qui entraîne le rotor (32) par l'intermédiaire de l'arbre d'entraînement (42),
d) une unité de palier (44) avec des paliers (46, 48, 50, 52, 54, 56 ; 64, 66, 68), qui présentent des éléments d'amortissement (46a, 48a, 50a ; 52a, 54a, 56a, 64a, 66a, 68a) comprenant respectivement un axe de ressort (46e, 48e, 50e ; 52e, 54e, 56e ; 64e, 66e, 68e), et
e) un élément de support (16) pour la fixation du moteur (18) par l'intermédiaire de l'unité de palier (44) dans la centrifugeuse (10),
dans laquelle au moins un élément d'amortissement est réalisé entièrement à partir de métal et sous la forme de coussinets métalliques (46a, 48a, 50a ; 46g, 48g, 50g ; 52a, 54a, 56a ; 52g, 54g, 56g ; 64a, 66a, 68a ; 64g, 66g, 68g) comprenant un fil tricoté avec des propriétés élastiques, **caractérisée en ce que** deux coussinets métalliques (46a, 48a, 50a ; 46g, 48g, 50g ; 52a, 54a, 56a ; 52g, 54g, 56g ; 64a, 66a, 68a ; 64g, 66g, 68g) forment conjointement un élément d'amortissement, dans laquelle le premier coussinet métallique (46a, 48a, 50a, 52a, 54a, 56a ; 64a, 66a, 68a) s'oppose à une déviation du rotor (32) dans une première direction et le deuxième coussinet métallique (46g, 48g, 50g ; 52g, 54g, 56g ; 64g, 66g, 68g) s'oppose à une déviation du rotor (32) dans une deuxième direction, dans laquelle l'unité de palier (44) présente au moins un palier (46, 48, 50) avec une plaque de palier (44a, 44b, 44c ; 44d, 44e, 44f ; 44g, 44h, 44i ; 44j, 44k, 44l), dans laquelle le premier coussinet métallique (46a, 48a, 50a ; 52a, 54a, 56a ; 64a, 66a, 68a) est disposé sur l'une des faces de la plaque de palier (44a, 44b, 44c ; 44d, 44e, 44f ; 44g, 44h, 44i ; 44j, 44k, 44l) et le deuxième coussinet métallique (46g, 48g, 50g ; 52g, 54g, 56g ; 64g, 66g, 68g) sur la deuxième face de la plaque de palier (44a, 44b, 44c), dans laquelle une tige de guidage (46b, 48b, 50b ; 52b, 54b, 56b ; 64b, 66b, 68b) traverse le premier coussinet métallique (46a, 48a, 50a ; 52a, 54a, 56a ; 64a, 66a, 68a), qui s'applique indirectement ou directement contre la plaque de palier (44a, 44b, 44c ; 44d, 44e, 44f ; 44g, 44h, 44i ; 44j, 44k, 44l), la plaque de palier (44a, 44b, 44c ; 44d, 44e, 44f ; 44g, 44h, 44i ; 44j, 44k, 44l) et le deuxième coussinet métallique (46g, 48g, 50g ; 52g, 54g, 56g ; 64g, 66g, 68g), qui s'applique indirectement ou directement contre la plaque de palier (44a, 44b, 44c ; 44d, 44e, 44f ; 44g, 44h, 44i ; 44j, 44k, 44l) et l'élément de support (16), dans laquelle la tige de guidage (46b, 48b, 50b ; 52b, 54b, 56b ; 64b, 66b, 68b) sur l'une des faces est reliée fixement à l'élément de support (16), et sur l'autre face présente une tête qui s'applique indirectement ou directement contre le premier coussinet métallique (46a, 48a, 50a ; 52a, 54a, 56a ; 64a, 66a, 68a), dans laquelle le premier coussinet métallique (46a, 48a, 50a ; 52a, 54a, 56a ; 64a, 66a, 68a), la plaque de palier (44a, 44b, 44c) et le deuxième coussinet métallique (46g, 48g, 50g ; 52g, 54g, 56g ; 64g, 66g, 68g) sont mobiles librement par rapport à la tige de guidage (46b, 48b, 50b ; 52b, 54b, 56b ; 64b, 66b, 68b).

2. Centrifugeuse selon la revendication 1, **caractérisée en ce que** la deuxième direction correspond à une direction d'une déviation du rotor (32) opposée à la première direction.

3. Centrifugeuse selon la revendication 1 ou 2, **caractérisée en ce que** les coussinets métalliques (46a, 48a, 50a ; 46g, 48g, 50g ; 52a, 54a, 56a ; 52g, 54g, 56g ; 64a, 66a, 68a ; 64g, 66g, 68g) sont réalisés de manière cylindrique.

4. Centrifugeuse selon l'une quelconque des revendications précédentes, **caractérisée en ce que** les éléments d'amortissement (20a, 22a, 24a ; 46a, 48a, 50a ; 52a, 54a, 56a ; 64a, 66a, 68a) de différents paliers (20, 22, 24 ; 46, 48, 50 ; 52, 54, 56 ; 64, 66, 68) sont réalisés de manière différente, en particulier les éléments d'amortissement (46a, 48a, 50a ; 52a, 54a, 56a ; 64a, 66a, 68a) d'un premier palier (46, 48, 50 ; 52, 54, 56 ; 64, 66, 68) sont optimisés en ce qui concerne l'amortissement, et les éléments d'amortissement (20, 22, 24) d'un deuxième palier (20, 22, 24) sont optimisés en ce qui concerne l'absorption du poids, de préférence un élément d'amortissement est au moins un coussinet métallique (46a, 48a, 50a ; 52a, 54a, 56a ; 64, 66, 68) et l'autre élément d'amortissement (20a, 20b, 20c) comprend au moins du caoutchouc.

5. Centrifugeuse selon l'une quelconque des revendications précédentes, **caractérisée en ce que** l'écart dans la direction périphérique par rapport à l'axe d'entraînement (42) entre des éléments d'amortissement (20a, 20b, 20c ; 46a, 48a, 50a ; 52a, 54a, 56a ; 64, 66, 68) voisins les uns par rapport aux autres est identique.

6. Centrifugeuse selon l'une quelconque des revendications précédentes, **caractérisée en ce qu'**au moins un axe de ressort (52e, 54e, 56e) d'un élément d'amortissement est orienté perpendiculairement à l'arbre d'entraînement (42).

7. Centrifugeuse selon l'une quelconque des revendications précédentes, **caractérisée en ce qu'**au moins un axe de ressort (20e, 20e, 20e ; 46e, 48e, 50e ; 64e, 66e, 68e) d'un élément d'amortissement (20a, 22a, 24a ; 46a, 48a, 50a ; 64a, 66a, 68a) est orienté parallèlement à l'arbre d'entraînement (42).

8. Centrifugeuse selon la revendication 6 ou 7, **caractérisée en ce que** plusieurs paliers (20, 22, 24 ; 52, 54, 56) sont pourvus d'éléments d'amortissement (20a, 22a, 24a ; 52a, 54a, 56a), dans laquelle les axes de ressort (52e, 54e, 56e) de la moitié des éléments d'amortissement (52a, 54a, 56a) perpendiculairement à l'arbre d'entraînement (42) et les axes de ressort (20e, 22e, 24e) de l'autre moitié des éléments d'amortissement (20a, 22a, 24a) sont orientés parallèlement à l'arbre d'entraînement (42).

9. Centrifugeuse selon l'une quelconque des revendications 6 à 8, **caractérisée en ce qu'**alternativement les axes de ressort (52e, 54e, 56e) des éléments d'amortissement (52a, 54a, 56a) sont orientés perpendiculairement à l'arbre d'entraînement (42) et les axes de ressort (20e, 22e, 24e) des éléments d'amortissement (20a, 22a, 24a) parallèlement à l'arbre d'entraînement (42).

10. Centrifugeuse selon l'une quelconque des revendications précédentes, **caractérisée en ce que** les éléments d'amortissement (46a, 48a, 50a ; 52a, 54a, 56a ; 62, 64, 66) admettent une déviation maximale dans la zone du rotor (32) inférieure à 2 mm, en particulier inférieure à 1,5 mm.

11. Centrifugeuse selon l'une quelconque des revendications précédentes, **caractérisée en ce que** les éléments d'amortissement (46a, 48a, 50a ; 52a, 54a, 56a, 64a, 66a, 68a) admettent une déviation maximale dans la zone des élément d'amortissement (20a, 22a, 24a) inférieure à 1 mm, en particulier inférieure à 0,9 mm.

12. Centrifugeuse selon l'une quelconque des revendications précédentes, **caractérisée en ce que** trois éléments d'amortissement (20a, 22a, 24a ; 46a, 48a, 50a ; 52a, 54a, 56a, 64a, 66a, 68a) sont prévus, dont l'axe de ressort (20e, 22e, 24e ; 46e, 48e, 50e ; 52e, 54e, 56e ; 64e, 66e, 68e) est orienté de manière respectivement identique.

13. Centrifugeuse selon l'une quelconque des revendications précédentes, **caractérisée en ce qu'**un disque (20d, 22d, 24d ; 46d, 48d, 50d ; 52d, 54d, 56d, 64d, 66d, 68d), en particulier un disque métallique, délimite, en particulier recouvre, l'élément d'amortissement (20a, 22a, 24a ; 46a, 48a, 50a ; 52a, 54a, 56a, 64a, 66a, 68a) dans la direction de l'axe de ressort (20e, 22e, 24e ; 46e, 48e, 50e ; 52e, 54e, 56e, 64e, 66e, 68e) sur une face, ainsi le disque (20d, 22d, 24d ; 46d, 48d, 50d ; 52d, 54d, 56d, 64d, 66d, 68d) recouvre entièrement l'élément d'amortissement (20a, 22a, 24a ; 46a, 48a, 50a ; 52a, 54a, 56a, 64a, 66a, 68a) dans la direction de l'axe de ressort (20e, 22e, 24e ; 46e, 48e, 50e ; 52e, 54e, 56e, 64e, 66e, 68e).

14. Centrifugeuse selon l'une quelconque des revendications précédentes, **caractérisée en ce que** le coussinet métallique (46a, 48a, 50a ; 52a, 54a, 56a, 64a, 66a, 68a) est formé par un fil d'acier, qui contient du chrome-nickel, en particulier le fil d'acier présente un diamètre de 0,05 mm à 0,5 mm inclus.

15. Centrifugeuse selon l'une quelconque des revendications précédentes, **caractérisée en ce que** le coussinet métallique (46a, 48a, 50a ; 52a, 54a, 56a, 64a, 66a, 68a) présente un diamètre extérieur de 12 mm à 50 mm inclus, et/ou que le coussinet métallique (46a, 48a, 50a ; 52a, 54a, 56a, 64a, 66a, 68a) est réalisé sous la forme d'un cylindre creux, en particulier avec un diamètre intérieur de 4 mm à 12 mm.

16. Centrifugeuse selon l'une quelconque des revendications précédentes, **caractérisée en ce que** le coefficient d'amortissement k du coussinet métallique (46a, 48a, 50a ; 52a, 54a, 56a, 64a, 66a, 68a) à une
- fréquence d'excitation de 1 Hz est compris entre 500 et 8000 Ns/m ;
- fréquence d'excitation de 10 Hz est compris entre 300 et 5000 Ns/m ;
- fréquence d'excitation de 20 Hz est compris entre 200 et 2500 Ns/m ;
- fréquence d'excitation de 50 Hz est compris entre 80 et 1200 Ns/m ;
- fréquence d'excitation de 100 Hz est compris entre 40 et 500 Ns/m.
et/ou que la rigidité (c) du coussinet métallique (46a, 48a, 50a ; 52a, 54a, 56a, 64a, 66a, 68a) se situe dans une plage de 3 N/mm à 300 N/mm.
